# EUROPEAN PATENT SPECIFICATION

(11) **EP 1 715 431 B1**
(45) Date of publication and mention of the grant of the patent: **16.01.2008**
(21) Application number: 05103047.6
(22) Date of filing: 18.04.2005
(51) Int. Cl.: G06F 17/30, G06F 17/22, H04L 29/08

(54) **System and method for developing mappings between different message structures**
System und Verfahren zur Entwicklung von Zuordnungen zwischen verschiedenen Nachrichtenstrukturen
Système et procédé pour développer des associations entre des structures de messages différents

(43) Date of publication of application: 25.10.2006
(73) Proprietor: Research In Motion Limited, Waterloo, Ontario N2L 3W8 (CA)
(72) Inventor: Mateescu, Daniel, Toronto, Ontario M3C 1C6 (CA); Cacenco, Michael V., Brampton, Ontario L6Y 4X4 (CA); Goring, Bryan R., Milton, Ontario L9T 5V4 (CA); Bibr, Viera, Kilbride, Ontario L0P 1G0 (CA); Shenfield, Michael, L4C 3S9, Richmond Hill, (CA)
(74) Representative: Rickard, David John

(56) References cited:
- WO-A-02/19154
- BURSTEIN M H: "The many faces of mapping and translation for semantic web services" WEB INFORMATION SYSTEMS ENGINEERING, 2003. WISE 2003. PROCEEDINGS OF THE FOURTH INTERNATIONAL CONFERENCE ON 10-12 DEC. 2003, PISCATAWAY, NJ, USA,IEEE, 10 December 2003 (2003-12-10), pages 261-268, XP010674533 ISBN: 0-7695-1999-7
- BLAMER M M ET AL: "A USER INTERFACE FOR COMPUTER-BASED MESSAGE TRANSLATION" PROCEEDINGS OF THE ANNUAL HAWAII INTERNATIONAL CONFERENCE ON SYSTEM SCIENCES, vol. 4, 3 January 1989 (1989-01-03), pages 43-51, XP002930271
- SUNGHAN KIM ET AL: "Design of documentation mediation system for mobile service" COMPUTER NETWORKS AND MOBILE COMPUTING, 2001. PROCEEDINGS. 2001 INTERNATIONAL CONFERENCE ON 16-19 OCT. 2001, PISCATAWAY, NJ, USA,IEEE, 16 October 2001 (2001-10-16), pages 189-193, XP010565893 ISBN: 0-7695-1381-6

## Description

This application relates generally to communications between a client application and a data source coupled over a network.

There are continually increasing numbers of terminals and mobile devices in use today, such as smart phones, PDAs with wireless communication capabilities, personal computers, self-service kiosks and two-way pagers/communication devices. Software applications which run on these devices help to increase their utility. For example, a smart phone may include an application which retrieves the weather for a range of cities, or a PDA which may include an application that allows a user to shop for groceries. These software applications take advantage of the connectivity to a network in order to provide timely and useful services to users. However, due to the restricted resources of some devices, and the complexity of delivering large amounts of data to the devices; developing and maintaining software applications tailored for a variety of devices remains a difficult and time-consuming task.

A major challenge faced in exposing complex data sources (such as webservices) to the wireless device is in terms of the size and complexity of data structures communicated in messaging between the device and the web service. In the wired world, where resources and efficiency are not such a concern, it is permissible to transmit large and complex structures of data back and forth. In order to make a wireless application work efficiently it is effective to allow the developer to specify how messages will be presented to the device from the perspective of the essential information required.

Systems and methods disclosed herein provide a development tool to obviate or mitigate at least some of the above-presented disadvantages.

Related problems exist with the development of semantic web services which are intended to be readily accessible by other software agents. These are discussed in an article by Mark H. Burnstein entitled "The Many Faces of Mapping and Translation for Semantic Web Services" (Web Information Systems Engineering, 2003.Wise 2003. Proceedings of the Fourth International Conference on 10-12 Dec. 2003 Piscataway, NJ, USA, IEEE, (2003-12-10) pages 261-268, XP010674533 ISBN: 0-765-1999-7. A specific example is given of communication between agents having different ontologies in which a shared ontology is developed onto which both agents are mapped.

A major challenge faced in exposing complex data sources (such as webservices) to the wireless device is in terms of the size and complexity of data structures communicated in messaging between the device and the web service. In the wired world, where resources and efficiency are not such a concern, it is permissible to transmit large and complex structures of data back and forth. In order to make a wireless application work efficiently it is effective to allow the developer to specify how messages will be presented to the device from the perspective of the essential information required. Contrary to current application development environments, a system and method are provided for generating a mapping model to transform and monitor message communications between a first message format and a second message format. The first message format is configured for use by a client and the second message format is configured for use by a data source. The data source is configured for network communication with the client through implementation of the mapping model. The system and method comprises: an application module for providing a description of the first message format, the first message format including at least one client message element for arranging in a first data structure; a data source module for providing a description of the second message format, the second message format including a plurality of data source message elements for arranging in a second multiple layer data structure, the multiple layers of the second data structure for representing relationships between the data source elements; a mapping module for generating at least one mapping descriptor of the mapping model by comparing the first data structure and the second data structure, the mapping descriptors for linking the at least one client message element of the first data structure to a plurality of the data source message elements of the second data structure, when the number of layers in the second data structure is greater than the number of layers in the first data structure; wherein the mapping model including the mapping descriptors is used subsequently for monitoring message communication between the client and the data source.

### GENERAL

Accordingly there is preferably provided a system for generating a mapping model to transform and monitor message communications between a first message format and a second message format, the first message format configured for use by a client and the second message format for use by a data source, the data source configured for network communication with the client through implementation of the mapping model, the system comprising: an application module for providing a description of the first message format, the first message format including at least one client message element for arranging in a first data structure; a data source module for providing a description of the second message format, the second message format including a plurality of data source message elements for arranging in a second multiple layer data structure, the multiple layers of the second data structure for representing relationships between the data source message elements; a mapping module for generating at least one mapping descriptor of the mapping model by comparing the first data structure and the second data structure, the mapping descriptors for linking the at least one client message element of the first data structure to a plurality of the data source message elements of the second data structure, when the number of layers in the second data structure is greater than the number of layers in the first data structure; wherein the mapping model including the mapping descriptors is used subsequently for monitoring message communication between the client and the data source.

Also disclosed is a method for generating a mapping model to transform and monitor message communications between a first message format and a second message format, the first message format configured for use by a client and the second message format for use by a data source, the data source configured for network communication with the client through implementation of the mapping model, the method comprising the steps of: obtaining a description of the first message format, the first message format including at least one client message element for arranging in a first data structure; obtaining a description of the second message format, the second message format including a plurality of data source message elements for arranging in a second multiple layer data structure, the multiple layers of the second data structure for representing relationships between the data source message elements; generating at least one mapping descriptor of the mapping model by comparing the first data structure and the second data structure, the mapping descriptors for linking the at least one client message element of the first data structure to a plurality of the data source message elements of the second data structure, when the number of layers in the second data structure is greater than the number of layers in the first data structure; wherein the mapping model including the mapping descriptors is used subsequently for monitoring message communication between the client and the data source.

Also disclosed is a computer program product for generating a mapping model to transform message communications between a first message format and a second message format, the first message format configured for use by a client and the second message format for use by a data source, the data source configured for network communication with the client through implementation of the mapping model, the computer program product comprising: a computer readable medium; an application module for obtaining a description of the first message format, the first message format including at least one client message element for arranging in a first data structure; a data source module for obtaining a description of the second message format, the second message format including a plurality of data source message elements for arranging in a second multiple layer data structure, the multiple layers of the second data structure for representing relationships between the data source message elements; a mapping module for generating at least one mapping descriptor of the mapping model by comparing the first data structure and the second data structure, the mapping descriptors for linking the at least one client message element of the first data structure to at least one of the data source message elements of the second data structure, such that a number of layers in the first data structure is not greater than the number of layers in the second data structure; wherein the mapping model including the mapping descriptors is used for monitoring message communication between the client and the data source.

In the preferred system and method according to the invention, the client is wirelessly connected to the network.

### BRIEF DESCRIPTION OF THE DRAWINGS

These and other features will become more apparent in the following detailed description in which reference is made to the appended drawings wherein:

Figure 1 is a block diagram of a communication network system;

Figure 2 is a block diagram of a tool for developing and generating the applications of Figure 1;

Figure 3 is a block diagram of network messaging of Figure 1;

Figure 4 is an example of a message mapping model the messaging of Figure 3;

Figure 5 shows an example operation of the tool of Figure 1;

Figure 6 is a block diagram of the tool architecture of Figure 2;

Figure 7 shows an example configuration of the application of Figure 1;

Figure 8 shows an example tree representation of a wireless message content and its fields of the application of Figure 1;

Figure 9 is a block diagram of the overall mapping process of Figure 5; and

Figure 10 is a block diagram for the mapping generation of Figure 9.

### DESCRIPTION OF PREFERRED EMBODIMENTS

### Network System

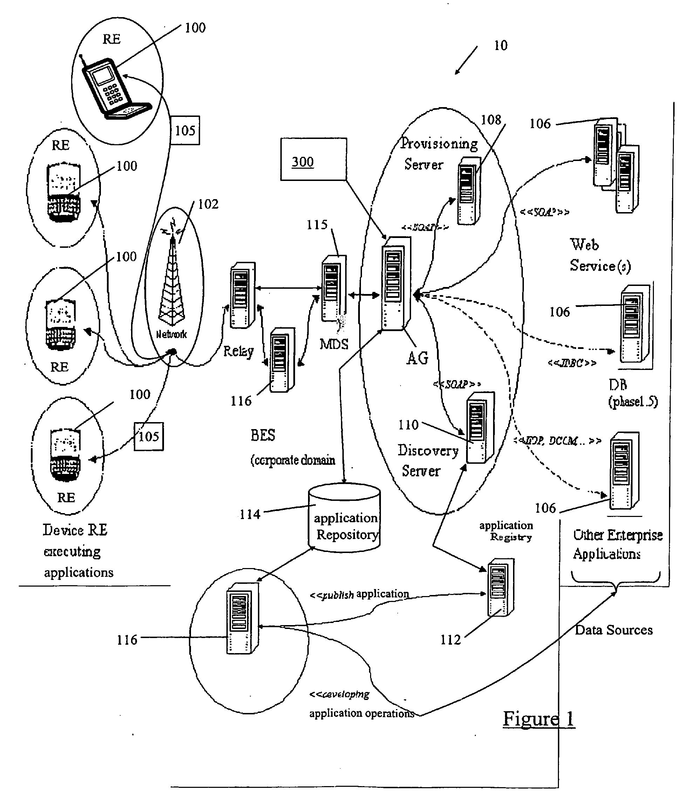

Referring to Figure 1, a network system 10 comprises mobile communication devices 100 for interacting with one or more backend data sources 106 (e.g. a schema based service such as web service or database that provides enterprise services used by an application 105) via a wireless network 102 coupled to an application gateway AG. The devices 100 are devices such as but not limited to mobile telephones, PDAs, two-way pagers, dual-mode communication devices. It is recognised that the application gateway AG and data sources 106 can be linked via extranets (e.g. the Internet) and/or intranets as is known in the art. The application gateway AG handles request/response messages initiated by the application 105 as well as subscription notifications pushed to the device 100 from the data sources 106. The Application Gateway AG functions as a Data Mapping Server for mediating messaging between a client runtime RE on the device 100 (executing the application(s) 105) and a backend server of the data sources 106. The gateway AG can provide for asynchronous messaging for the applications 105 and can integrate and communicate with legacy back-end data sources 106. The devices 100 transmit and receive the wireless applications 105, as further described below, when in communication with the data sources 106, as well as transmit/receive messaging associated with operation of the applications 105. The devices 100 operate as web clients of the data sources 106 through execution of the applications 105 when provisioned on respective runtime environments RE of the devices 100.

For satisfying the appropriate messaging associated with the applications 105, the application gateway AG communicates with the data sources 106 through various protocols (such as but not limited to HTTP, SQL, and component API) for exposing relevant business logic (methods) to the applications 105 once provisioned on the devices 100. The applications 105 can use the business logic of the data sources 106 similarly to calling a method on an object (or a function). It is recognized that the applications 105 can be downloaded/uploaded in relation to data sources 106 via the network 102 and application gateway AG directly to the devices 100. For example, the application gateway AG is coupled to a provisioning server 108 and a discovery server 110 for providing a mechanism for optimized over-the-air provisioning of the applications 105, including capabilities for application 105 discovery from the device 100 as listed in a Universal Description, Discovery and Integration (UDDI), for example, registry 112. The Registry 112 is a directory service where businesses can register and search for Web services, and can be part of the Discovery Service implemented by the server 110. The registry 112 is used for publishing the applications 105. The application 105 information in the registry 112 can contain such as but not limited to a Deployment Descriptor DD (contains information such as application 105 name, version, and description) as well as the location of this application 105 in an application repository 114. The registry can provide a directory for storing information about web services (as provided by the data sources 106) including a directory of web service interfaces described by WSDL, for example. Further, UDDI as a registry 112 is based on Internet standards such as but not limited to XML, HTTP, and DNS protocols.

Referring again to Figure 1, for initialization of the runtime environment RE, the RE can receive the gateway AG URL and the gateway AG public key in a MDS 115 service book. The runtime environment RE uses this information to connect to the gateway AG for initial handshaking. Device 100 provisioning or BES 116, depending on the domain, pushes the MDS 115 service book to the device 100. It is recognised there could be more than one gateway AG in the network 10, as desired. Once initialized, access to the applications 105 by the devices 100, as downloaded/uploaded, can be communicated via the gateway AG directly from the application repository 114, and/or in association with data source 106 direct access (not shown) to the repository 114.

### Example Data Source 106

Data sources 106 can be described, for example, using WSDL (Web Services Description Language) and therefore presented to the network as a service commonly referred to a web service. For example, WSDL is written in XML as an XML document used to describe Web services and to locate Web services, i.e. the XML document can specify the location of the web service and the operations (or methods) the service exposes to the network (e.g. Internet). The WSDL document defines the web service using major elements, such as but not limited to: <portType> being the operations performed by the web service (each operation can be compared to a function in a traditional programming language such that the function is resident on the web service itself); <message> being the message formats used by the web service; <types> being the data types used by the web service and being typically part of the messages themselves; and <binding> being the communication protocols used by the web service for communicating the messages between the web service and the application gateway AG. Further, a service element could be included in the WSDL document to identify the location (e.g. URL) of the web service itself and to manage the logical network connection between the application gateway (for example) and the web service according to the communication protocols provided by the binding element.

The WSDL document can for example be used by the application gateway AG for brokering the messaging between the web service and the device(s). The WSDL document can also contain other elements, like extension elements and a service element that makes it possible to group together the definitions of several web services in one single WSDL document. The <portType> element defines the web service, the operations that can be performed by the web service, and the messages that are involved with respect to the web service operations. A WSDL port describes the interfaces (legal operations) exposed by the web service. The <portType> element can be compared to a function library (or a module, or a class) in a traditional programming language. The <message> element defines the data elements of the operation as well as the name associated with each of the messages for interaction with the operation. Each message can consist of one or more parts. The parts can be compared to the parameters of a function call in a traditional programming language, such that the function is part of the web service itself. The <types> element defines the data types that are used by the web service. To help in providing maximum platform neutrality, WSDL uses XML Schema syntax to define data types. The <binding> element defines the message format and communication protocol details for each operation, such that the message format and communication protocol is such as expected by the web service.

The request-response operation type is the most common operation type, but WSDL defines four operation types, such as but not limited to: One-way where the operation can receive a message but will not return a response; Request-response where the operation can receive a request and will return a response; Solicit-response where the operation can send a request and will wait for a response; and Notification where the operation can send a message but will not wait for a response.

WSDL bindings defines the message format and protocol details for the web service. The binding element has two attributes - the name attribute and the type attribute. The name attribute (you can use any name you want) defines the name of the binding, and the type attribute points to the port for the binding, in this case the "glossaryTerms" port. The soap:binding element has two attributes - the style attribute and the transport attribute. The style attribute can be "rpc" or "document". In this case we use document. The transport attribute defines the SOAP protocol to use. In this case we use HTTP. The operation element defines each operation that the port exposes. For each operation the corresponding SOAP action has to be defined. You must also specify how the input and output are encoded. In this case we use "literal". It is understood that protocols other than SOAP can be used, if desired.

### WSDL Example

The following is a simplified fraction of an example WSDL document.

```
 <message name=''getTermRequest">
  <part name=''term" type="xs:string"/>
 </message>
 <message name="getTermResponse">
  <part name="value" type="xs:string''/>
 </message>
 <portType name="glossaryTerms">
  <operation name="getTerm">
   <input message="getTermRequest"/>
   <output message="getTermResponse"/>
  </operation>
 </portType>
 <binding type="glossaryTerms" name="b1">
 <soap:binding style="document"
 transport="http://schemas.xmlsoap.org/soaplhttp'' />
  <operation>
   <soap:operation
   soapAction="http://example.com/getTerm"/>
   <input>
    <soap:body use="literal"/>
   </input>
   <output>
    <soap:body use="literal"/>
   </output>
  </operation>
 </binding>
```

In the above example the portType element defines "glossaryTerms" as the name of the port, and "getTerm" as the name of the corresponding operation. The "getTerm" operation has an input message called "getTermRequest" and an output message called "getTermResponse". The message elements defines the parts of each message and the associated data types. Compared to traditional programming, glossaryTerms can be a function library, "getTerm" can be a function with "getTermRequest" as the input parameter and getTermResponse as the return parameter.

### Application Design User Interface or Tool 116

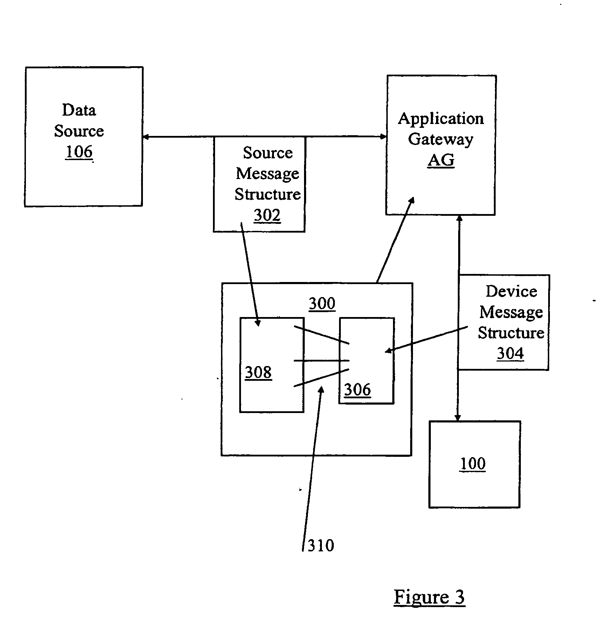

Referring to Figure 1, the applications 105 can be stored in the repository 114 as a series of packages that can be created by a Studio developer tool 116, which is employed by developers of the applications 105. The developer design tool 116 can be a RAD tool used to develop the Wireless Application 105 packages, as well as develop a mapping model 300 (see Figure 3) that defines mapping information between the message elements of the application(s) 105 and various message and data structures of the data sources 106, as further described below. The tool 116 can provide support for a drag-and drop graphical approach for the visual design of the application 105, including the mapping model. For example, in a component based XML-Script application model, the application 105 packages can be represented as metadata (XML) that can be generated automatically by the tool 116 through an automatic code generation process. The tool 116 can provide for the automatic generated code to include or be otherwise augmented by an industry standard scripting language (e.g. JavaScript) or other scripting/programming languages known in the art. The availability of the application 105 packages of the repository 114 are published via the discovery service of the server 110 in the registry 112. It is recognized that there can be more than one repository 114 and associated registries 112 as utilized by the particular network 10 configuration of the application gateway AG and associated data sources 106.

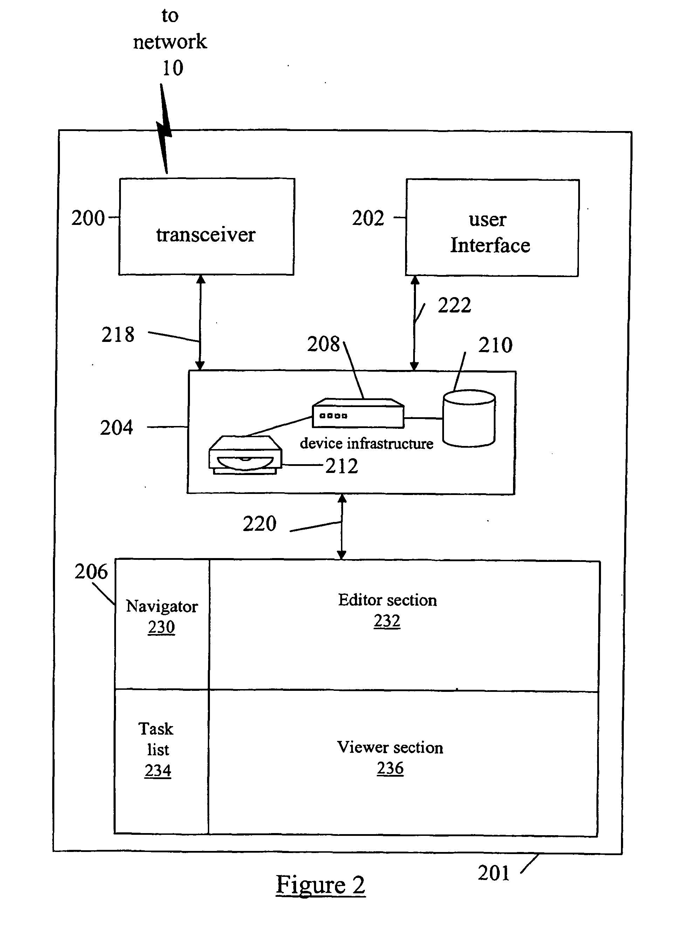

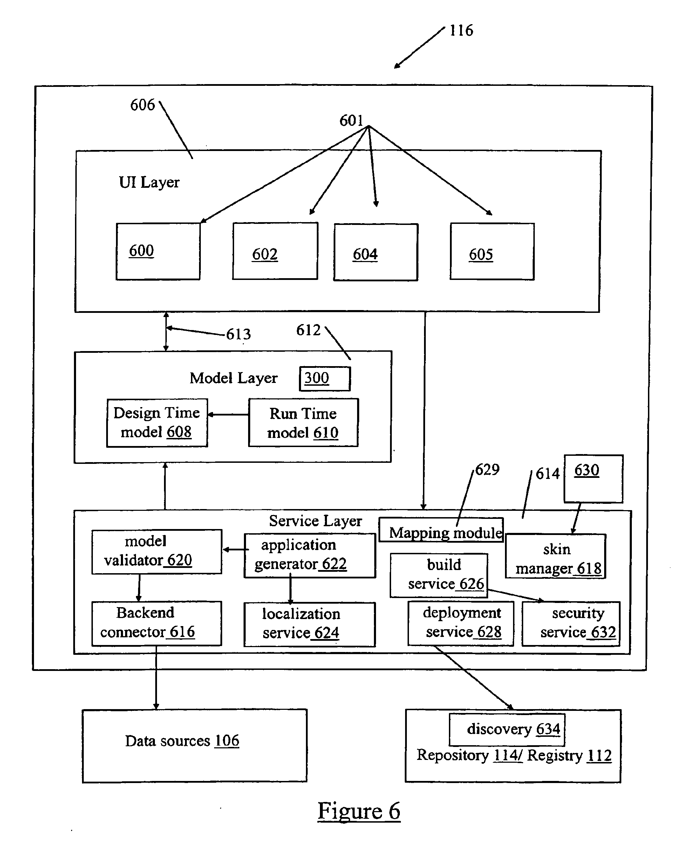

Referring to Figure 2, the tool 116 is operated on a computer 201 that can be connected to the network 10 via a network connection interface such as a transceiver 200 coupled via connection 218 to a device infrastructure 204. The transceiver 200 can be used to upload completed application programs 105 to the repository 114 (see Figure 1), as well as access the registry 112 and selected data sources 106. Referring again to Figure 2, the developer design tool 116 also has a user interface 202, coupled to the device infrastructure 204 by connection 222, to interact with a user (not shown). The user interface 202 includes one or more user input devices such as but not limited to a keyboard, a keypad, a trackwheel, a stylus, a mouse, a microphone, and is coupled to a user output device such as a speaker (not shown) and a screen display 206. If the display 206 is touch sensitive, then the display 206 can also be used as the user input device as controlled by the device infrastructure 204. The user interface 202 is employed by the user of the tool 116 to coordinate the design of applications 105 and/or the mapping model 300 (see Figure 3) using a series of editors 600 and viewers 602 (see Figure 6) and using a plurality of wizards 604 to assist/drive in the workflow of the development process. The mapping model 300 can be defined as a description mapping the web service 106 data structures 308 of the messages 302 to and from the simplified messages 304 of the data structures306 used on the device 100. The Gateway AG would use this mapping model 300 to transform message data to and from device 100 accordingly via the messages 302,304, i.e. using the mapping 300 information to reformat the simplified device message 304 to and from the web services' 106 complex message 302 format.

Referring again to Figure 2, operation of the tool computer 201 is enabled by the device infrastructure 204. The device infrastructure 204 includes a computer processor 208 and the associated memory module 210. The computer processor 208 manipulates the operation of the network interface 200, the user interface 202 and the display 206 of the tool 116 by executing related instructions, which are provided by an operating system and application 105 and/or mapping model 300 design editors 600, wizards 604, dialogs 605 and viewers 602 resident in the memory module 210. Further, it is recognized that the device infrastructure 204 can include a computer readable storage medium 212 coupled to the processor 208 for providing instructions to the processor 208 and/or to load/design the applications 105 also resident (for example) in the memory module 210. The computer readable medium 212 can include hardware and/or software such as, by way of example only, magnetic disks, magnetic tape, optically readable medium such as CD/DVD ROMS, and memory cards. In each case, the computer readable medium 212 may take the form of a small disk, floppy diskette, cassette, hard disk drive, solid state memory card, or RAM provided in the memory module 210. It should be noted that the above listed example computer readable mediums 212 can be used either alone or in combination.

Referring again to Figure 2, the design tool 116 is operated on the computer 201 as a development environment for developing the applications 105 and/or the mapping model 300. The development methodology of the tool 116 can be based on a visual "drag and drop" system of building the application visual, data, messaging behaviour, and runtime navigation model. The tool 116 can be structured as a set of plug-ins to a generic integrated design environment (IDE) framework, such as but not limited to the Eclipse framework, or the tool 116 can be configured as a complete design framework without using plug-in architecture. For exemplary purposes only, the tool 116 will now be described as a plug-in design environment using the Eclipse framework.

Referring to Figures 2 and 6, Eclipse makes provisions for a basic, generic tool 116 environment that can be extended to provide custom editors, wizards, project management and a host of other functionality. The Eclipse Platform is designed for building integrated development environments (IDEs) that can be used to create applications as diverse as web sites, embedded Java TM programs, C++ programs, and Enterprise JavaBeans TM. The navigator view 230 shows files in a user's (e.g. developer) workspace; a text editor section 232 shows the content of a file being worked on by the user of the tool 116 to develop the application 105 and/or model 300 in question; the tasks view section 234 shows a list of to-dos for the user of the tool 116; and the outline viewer section 236 shows for example a content outline of the application 105 and/or model 300 being designed/edited, and/or may augment other views by providing information about the currently selected object such as properties of the object selected in another view. It is recognised that the tool 116 aids the developer in creating and modifying the coded definition content of the application 105 and/or model 300, for example in a structured definition language (e.g. in XML). Further, the tool 116 also aids the developer in creating, modifying, and validating the interdependencies of the definition content between the application message/data and/or screen/data relationships included in the application 105 definition and the mapping model 300. It is also recognised that presentation on the display of wizard 604 and dialog 605 content for use by the developer (during use of the editors 600 and viewers 602) can be positioned in one of the sections 230,232,234,236 and/or in a dedicated wizard section (not shown), as desired.

The Eclipse Platform is built on a mechanism for discovering, integrating, and running modules called plug-ins (i.e. editors 600 and viewers 602). When the Eclipse Platform is launched via the UI 202 of the computer 201, the user is presented with an integrated development environment (IDE) on the display 206 composed of the set of available plug-ins, such as editors 600 and viewers 602. The various plug-ins to the Eclipse Platform operate on regular files in the user's workspace indicated on the display 206. The workspace consists of one or more top-level projects, where each project maps to a corresponding user-specified directory in the file system, as stored in the memory 210 (and/or accessible on the network 10), which is navigated using the navigator 230. The Eclipse Platform UI paradigm is based on editors, views, and perspectives. From the user's standpoint, a workbench display 206 consists visually of views 602 and editors 600. Perspectives manifest themselves in the selection and arrangements of editors 600 and views 602 visible on the display 206. Editors 600 allow the user to open, edit, and save objects. The editors 600 follow an open-save-close lifecycle much like file system based tools. When active, a selected editor 600 can contribute actions to a workbench menu and tool bar. Views 602 provide information about some object that the user is working with in the workbench. A viewer 602 may assist the editor 600 by providing information about the document being edited. For example, viewers 602 can have a simpler lifecycle than editors 600, whereby modifications made in using a viewer 602 (such as changing a property value) are generally saved immediately, and the changes are reflected immediately in other related parts of the display 206. It is also recognised that a workbench window of the display 206 can have several separate perspectives, only one of which is visible at any given moment. Each perspective has its own viewers 602 and editors 600 that are arranged (tiled, stacked, or detached) for presentation on the display 206.

### Applications 105

For example, the applications 105 can be compiled applications for transmission to, and subsequent execution on, the device 100 or can be packages having application elements or artifacts such as but not limited to XML definitions, mappings (part of the mapping model 300), application resources, and optionally resource bundle(s) for localization support. XML file definitions can be XML coding of application data, messages, screens components (optionally workflow components), part of the raw uncompiled application 105. It is recognised that XML syntax is used only as an example of any structured definition language applicable to coding of the applications 105. The XML definitions may be produced either by the tool 116 generation phase, described below, or may be hand-coded by the developer as desired. The application XML definitions can be generically named and added to the top level (for example) of a jar file.

The resources are one or more resources (images, soundbytes, media, etc...) that are packaged with the application 105 as static dependencies. For example, resources can be located relative to a resources folder (not shown) such that a particular resource may contain its own relative path to the main folder (e.g. resources/icon.gif, resources/screens/clipart_1.0/happyface.gif, and resources/soundbytes/midi/inthemood.midi). The resource bundles can contain localization information for each language supported by the application 105. These bundles can be locatred in a locale folder, for example, and can be named according to the language supported (e.g. locale/lang_en.properties and locale/lang_fr.properties).

For example, the runtime environment RE of the device 100 can be the client-resident container within which the applications 105 are executed on the device 100. The container can manage the application 105 lifecycle on the device 100 (provisioning, execution, deletion, etc.) and is responsible for translating the metadata (XML) representing the application 105 (in the case of raw XML definitions) into an efficient executable form on the device 100. The application 105 metadata is the executable form of the XML definitions, as described above, and can be created and maintained by the runtime environment RE. The RE can also provide a set of common services to the application 105, as well as providing support for optional JavaScript or other scripting languages. These services include support for such as but not limited to UI control, data persistence and asynchronous client-server messaging. It is recognised that these services could also be incorporated as part of the application 105, if desired.

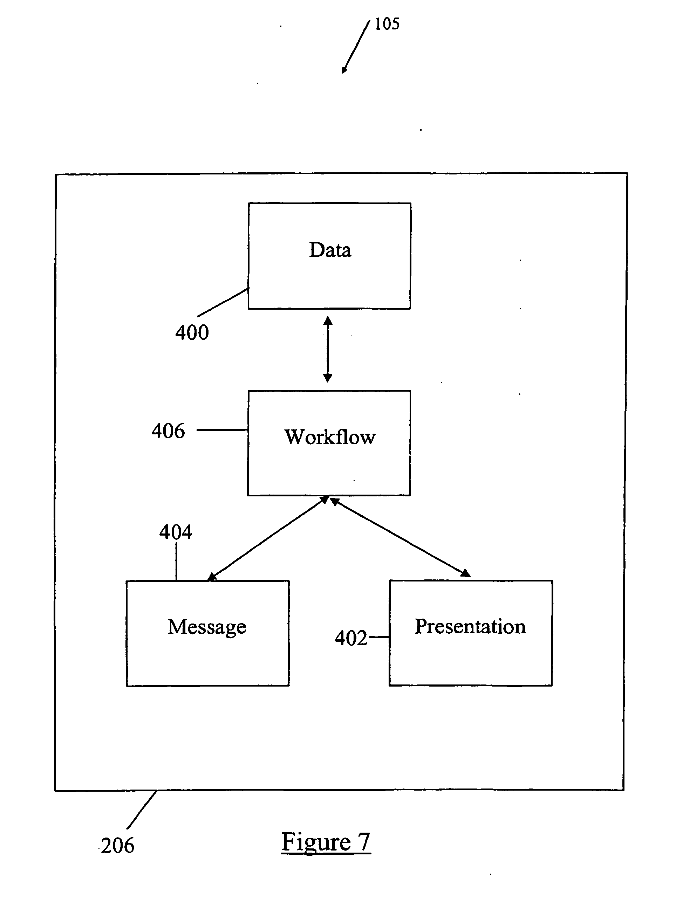

Referring to Figure 7, as an example only, the applications 105 can be component architecture based software applications which can have artifacts written, for example, in eXtensible Markup Language (XML) and a subset of ECMAScript. XML and ECMAScript are standards-based languages, which allow software developers to develop the component applications 105 in a portable and platform-independent way. A block diagram of the component application 105 comprises the data components 400, the presentation components 402 and the message components 404, which are coordinated by workflow components 406 through interaction with the client runtime environment RE of the device 100 (see Figure 1) once proivisioned thereon. The structured definition language (e.g. XML) can be used to construct the components 400, 402, 404 as a series of metadata records, which consist of a number of pre-defined elements representing specific attributes of a resource such that each element can have one or more values. Each metadata schema typically has defined characteristics such as but not limited to; a limited number of elements, a name of each element, and a meaning for each element. Example metadata schemas include such as but not limited to Dublin Core (DC), Anglo-American Cataloging Rules (AACR2), Government Information Locator Service (GILS), Encoded Archives Description (EAD), IMS Global Learning Consortium (IMS), and Australian Government Locator Service (AGLS). Encoding syntax allows the metadata of the components 400, 402, 404 to be processed by the runtime environment RE (see Figure 1), and encoding schemes include schemes such as but not limited to XML, HTML, XHTML, XSML, RDF, Machine Readable Cataloging (MARC), and Multipurpose Internet Mail Extensions (MIME). The client runtime environment RE of the device 100 operates on the metadata descriptors of the components 400, 402, 404 to provision an executable version of the application 105.

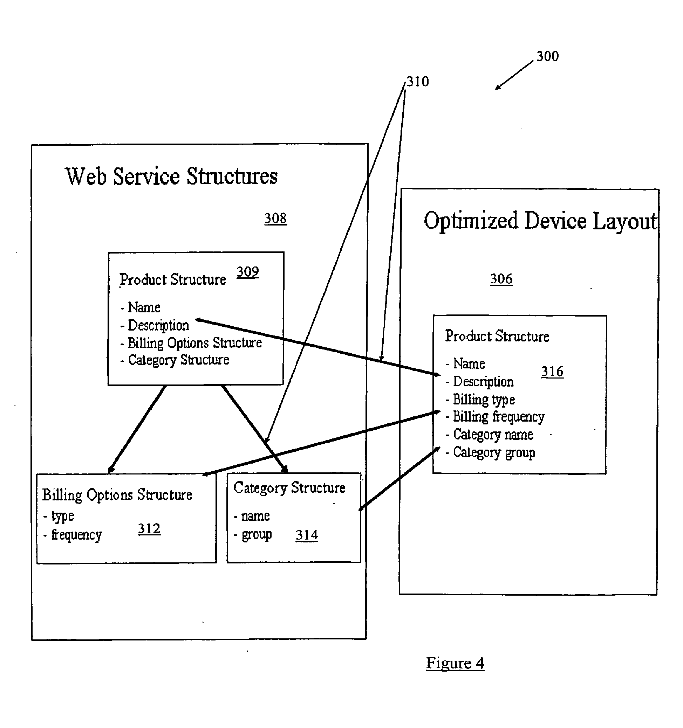

Referring again to Figure 4, the data components 400 define data entities, which are used by the application 105. Data components 400 define what information is required to describe the data entities, and in what format the information is expressed. For example, the data component 400 may define information such as but not limited to an order which is comprised of a unique identifier for the order which is formatted as a number, a list of items which are formatted as strings, the time the order was created which has a date-time format, the status of the order which is formatted as a string, and a user who placed the order which is formatted according to the definition of another one of the data components 400.

Referring again to Figure 4, the message components 404 define the format of messages used by the component application 105 to communicate with external systems such as the web service. For example, one of the message components 404 may describe information such as but not limited to a message for placing an order, which includes the unique identifier for the order, the status of the order, and notes associated with the order. It is recognised that data definition content of the components can be shared for data 400 and message 404 components that are linked or otherwise contain similar data definitions. The message component 404 allows the message content to be evaluated to determine whether mandatory fields have been supplied in the message 304 (see Figure 3) and to be sent to the data source 106 via the AG.

Referring again to Figure 4, the presentation components 402 define the appearance and behavior of the component application 105 as it displayed by a user interface of the devices 100. The presentation components 402 can specify GUI screens and controls, and actions to be executed when the user interacts with the component application 105 using the user interface. For example, the presentation components 402 may define screens, labels, edit boxes, buttons and menus, and actions to be taken when the user types in an edit box or pushes a button. It is recognised that data definition content of the components can be shared for data 400 and presentation 402 components that are linked or otherwise contain similar data definitions.

Referring to Figures 1 and 4, it is recognized that in the above described client component application 105 definitions hosting model, the presentation components 402 may vary depending on the client platform and environment of the device 100. For example, in some cases Web Service consumers do not require a visual presentation. The application definition of the components 400, 402, 404, 406 of the component application 105 can be hosted in the Web Service repository 114 as a package bundle of platform-neutral data 400, message 404, workflow 406 component descriptors with a set of platform-specific presentation component 402 descriptors for various predefined client runtimes RE. When the discovery or deployment request message for the application 105 is issued, the client type would be specified as a part of this request message. In order not to duplicate data, message, and workflow metadata while packaging component application 105 for different client platforms of the communication devices 100, application definitions can be hosted as a bundle of platform-neutral component definitions linked with different sets of presentation components 402. For those Web Service consumers, the client application 105 would contain selected presentation components 402 linked with the data 400 and message 404 components through the workflow components 406.

Referring again to Figure 4, the workflow components 406 of the component application 105 define processing that occurs when an action is to be performed, such as an action specified by a presentation component 402 as described above, or an action to be performed when messages arrive from the application gateway AG (see Figure 1). Presentation, workflow and message processing are defined by the workflow components 406. The workflow components 406 are written as a series of instructions in a programming language (e.g. object oriented programming language) and/or a scripting language, such as but not limited to ECMAScript, and can be (for example) compiled into native code and executed by the runtime environment 206, as described above. An example of the workflow components 406 may be to assign values to data, manipulate screens, or send the message 105. As with presentation components, multiple workflow definitions can be created to support capabilities and features that vary among devices 100. ECMA (European Computer Manufacturers Association) Script is a standard script language, wherein scripts can be referred to as a sequence of instructions that is interpreted or carried out by another program rather than by the computer processor. Some other example of script languages are Per1, Rexx, VBScript, JavaScript, and Tcl/Tk. The scripting languages, in general, are instructional languages that are used to manipulate, customize, and automate the facilities of an existing system, such as the devices 100.

Referring to Figure 4, the application 105 is structured, for example, using component architecture such that when the device 100 (see Figure 1) receives a response message from the application gateway AG containing message data, the appropriate workflow component 406 interprets the data content of the message according to the appropriate message component 404 definitions. The workflow component 406 then processes the data content and inserts the data into the corresponding data component 400 for subsequent storage in the device 100. Further, if needed, the workflow component 406 also inserts the data into the appropriate presentation component 402 for subsequent display on the display of the device 100. A further example of the component architecture of the applications 105 is for data input by a user of the device 100, such as pushing a button or selecting a menu item. The relevant workflow component 406 interprets the input data according to the appropriate presentation component 404 and creates data entities, which are defined by the appropriate data components 400. The workflow component 406 then populates the data components 400 with the input data provided by the user for subsequent storage in the device 100. Further, the workflow component 406 also inserts the input data into the appropriate message component 404 for subsequent sending of the input data as data entities to the data source 106, web service for example, as defined by the message component 404.

It is recognized that the above example content of a component based application 105 could also be applied to a more traditional integrated application in which the various data, message, workflow, and screen coding (representing the application 105 functionality) is not structured as discrete interactive components, rather as an integrated program. However the form of the application 105, the use of the mapping model 300 by the application gateway AG would be similar, once the model 300 is produced by the tool 116 and made available to the application gateway AG.

An example component application 105 represented in XML and mEScript could be as follows, including data components 400 as "wcData" and message components 404 content as "wcMsg",:

```
       <wcData name="User">
               <dfield name="name" type="String" key="1"/>
               <dfield name="passwordHash" type="String"/>
               <dfield name="street" type="String"/>
               <dfield name="city" type="String"/>
               <dfield name="postal" type="String"/>
               <dfield name="phone" type="String"/>
       </wcData>
       <wcData name="OrderStatus">
               <dfield name="confNumber" type="Number" key="1"/>
               <dfield name="status" type="String"/>
               <dfield name="datetime" type="Date"/>
       </wcData>
       <wcData name="Order">
               <dfield name="orderld" type="Number" key="1"/>
               <dfield name="special" type="String"/>
               <dfield name="user" cmp="true" cmpName="User"/>
               <dfield name="datetime" type="Date"/>
               <dfield name="orderStatus" cmp="true" cmpName="OrderStatus"/>
       </wcData>
       <wcData name="Special">
               <dfield name="desc" key="1" type="String"/>
               <dfield name="price" type="Number"/>
        </wcData>
        <wcMsg name="inAddSpecial" mapping="Special">
        </wcMsg>
        <wcMsg name="inRemoveSpecial" pblock="mhRemoveSpecial">
               <mfield name="desc" mapping="Special.desc"/>
        </wcMsg>
        <wcMsg name="inOrderStatus">
               <mfield name="orderld" mapping="Order.orderld"/>
               <mfield name="status" mapping="Order.orderStatus"/>
        </wcMsg>
        <wcMsg name="inUserlnfo" mapping="User">
        </wcMsg>
        <wcMsg name="outOrder">
               <mfield name="special" mapping="Order.special"/>
               <mfield name="user" mapping="Order.user"/>
               <mfield name="datetime" mapping="Order.datetime"/>
        </wcMsg>
```

As given above, the XML wcData element content defines the example data component 400 content, which is comprised of a group of named, typed fields. The wcMsg element content defines the example message component 404, which similarly defines a group of named, typed fields.

### Designer Tool 116 Architecture

Figure 6 illustrates the overall designer tool 116 structure for designing applications 105 and/or the associated mapping model 300. The designer tool 116 interface (UI 202 and display 206 - see Figure 2) is primarily a user facing module 601 collection of graphical and text editors 600, viewers 602, dialogs 605 and wizards 604. The large majority of external interactions are accomplished through one or more of these editors 600, with the developer/user, using a system of drag and drop editing and wizard driven elaboration. The secondary and non-user facing system interface is that of the "Backend", whereby the tool 116 connects to and digests data source 106 services such as Web Services and SQL Databases. As described above, the tool 116 can be built on the Eclipse platform, whereby the user interface system components can be such as but not limited to components of editors 600, viewers 602, dialogs (not shown) and wizards 604, which are plug-in modules 601 that extend Eclipse classes and utilize the Eclipse framework, for example. As shown, the tool 116 communicates with backend data sources 106 and UDDI repositories 114 and registries 112. These external systems 106, 112, 114 may not be part of the tool 116 but are shown for completeness.

### UI Layer 606

The tool 116 has a UI Layer 606 composed mainly of the editors 600 and viewers 602, which are assisted through the workflow wizards 605. The layer 606 has access to an extensive widget set and graphics library known as the Standard Widget Toolkit (SWT), for Eclipse. The UI layer 606 modules 601 can also make use of a higher-level toolkit called JFace that contains standard viewer classes such as lists, trees and tables and an action framework used to add commands to menus and toolbars. The tool 116 can also use a Graphical Editing Framework (GEF) to implement diagramming editors. The UI layer 606 modules 601 can follow the Model-View-Controller design pattern where each module 601 is both a view and a controller. Data models 608,610 represents the persistent state of the application 105 and are implemented in the data model layer 612 the tool 116 architecture. The separation of the layers 606, 612 keeps presentation specific information in the various views and provides for multiple UI modules 601 (e.g. editors 600 and viewers 602) to respond to data model 608,610 changes. Operation by the developer of the editors 600 and viewers 602 on the display 202 (see Figure 2) can be assisted by the wizards 604 for guiding the development of the application 105 and/or the mapping model 300.

Referring to Figure 6, the UI Layer 606 is comprised of the set of editors 600, viewers 602, wizards 604 and dialogs 605. The UI Layer 606 uses the Model-View-Controller (MVC) pattern where each UI module 601 is both a View and a Controller. UI Layer modules 601 interact with data models 608,610 and the mapping model 300 with some related control logic as defined by the MVC pattern. The editors 600 are modules 601 that do not commit model 608,610,300 changes until the user of the tool 116 chooses to "Save" them. Viewers 602 are modules 601 that commit their changes to the model 608,612,300 immediately when the user makes them. Wizards 604 are modules 601 that are step-driven by a series of one or more dialogs 605, wherein each dialog 605 gathers certain information from the user of the tool 116 via the user interface 202 (see Figure 2). No changes are applied to the design time model 608 using the wizards 604 until the user of the tool 116 selects a confirmation button like a "Finish". It is recognised in the example plug-in design tool 116 environment, modules 601 can extend two types of interfaces: Eclipse extension points and extension point interfaces. Extension points declare a unique package or plug-in already defined in the system as the entry point for functional extension, e.g. an editor 600, wizard 604 or project. Extension point interfaces allow the tool 116 to define its own plugin interfaces, e.g. for skins 618 and backend 616 connectors, as further described below.

### Data Models 608, 610 and Mapping Model 300

The tool 116 data models 608,610 and mapping model 300 are based, by example, on the Eclipse Modeling Framework (EMF). It is recognised that other modeling frameworks can be used, as desired. The framework provides model 608, 610, 310 change notification, persistence support and an efficient reflective API for manipulating EMF objects generically. The code generation facility is used to generate the model 608, 610, 300 implementation and create adapters to connect a model layer 612 with the user interface modules 601 of the UI layer 606.

Referring again to Figure 6, modules 601 (primarily Editors 600 and Viewers 602) in the tool 116 are observers of the data models 608,610 and mapping model 300 and are used to interact or otherwise test and modify the data models 608,610 and mapping model 300 of the application (e.g. components 400, 402, 404, 406 - see Figure 4) in question. When the data model 608,610 and mapping model 300 changes, the models 608,610 and mapping model 300 are notified and respond by updating the presentation of the application 105. The tool 116 uses the Eclipse Modeling Framework (EMF), for example, to connect the Eclipse UI framework to the tool 116 data model 608,610 and mapping model 300, whereby the modules 601 can use the standard Eclipse interfaces to provide the information to display and edit an object on the display 206 (see Figure 2). In general, the EMF framework implements these standard interfaces and adapt calls to these interfaces by calling on generated adapters that know how to access the data model 608,610 and mapping model 300 residing in memory 210. The design time Data Model 608 is used to represent the current version of the application 105 (e.g. an application module) in development and is accessed by the users employing the modules 601 to interact with the associated data of the model 608. Modules 601 can also trigger validation actions on the Design Time Data Model 608. Modules 601 can also cause some or all of the application 105 to be generated from the Design Time Data Model 608 resident in memory 210. In general, the Design Time Data Model 608 accepts a set of commands via the UI 202 (see Figure 2) that affect the state of the model 608, and in response may generate a set of events. Each module 601 (editor 600 and viewer 602) described includes the set of commands and the events that affect the module 601 and data model 608 pairing.

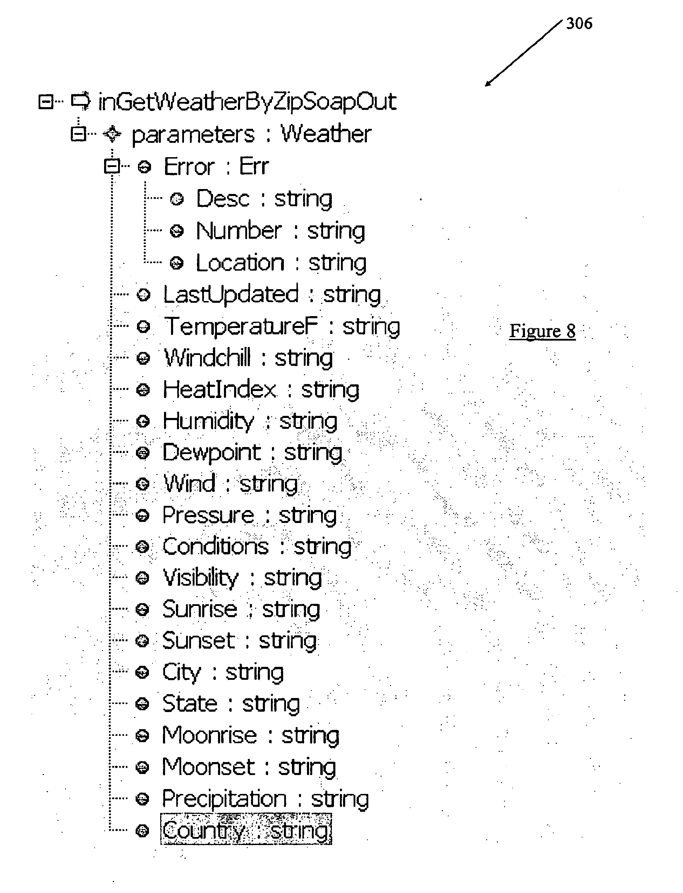

Referring to Figures 6 and 8, the Runtime Data Model 610 represents the state of an emulated application 105 under development by the tool 116, using as a basis the contents of the design time data model 608. The runtime data model 610 stores values for the following major items, such as but not limited to; Data Components 400 (see Figure 4); Global Variables; Message Components 404; Resources; Screen Components 402 and Styles. The Runtime Data Model 610 collaborates with the Design Time Data Model 608 and a Testing/Preview viewer (not shown) during emulation of application 105 for testing and preview purposes (for example). The viewer also collaborates with the skin manager 616 for emulating the runtime data model 610 for a specified device 100 type. The Runtime Data Model 610 also notifies, through a bridge 613, the viewer as well as any other modules 601 of the UI layer 606 associated with changes made to the model 610. For example, an API call can be used as a notifier for the associated modules 601 when the state of the model 610 has changed. The Design Time Data Model 608 represents the state of an application 105 development project and interacts with the modules 601 of the UI layer 606 by notifying modules 601 when the state of the model 608 has changed as well as saving and loading objects from storage 210. The model's 608 primary responsibility is to define the applications 105 including such as but not limited to the following items: Data Component 400 Definitions; Global Variable Definitions; Message Component 404 Definitions; Resource 304,306 Definitions; Screen Component 402 Definitions; Scripts 406; Style Definitions and Backend data source 106 Mapping 302 Descriptors. The Design Time Data Model 608 responds to commands of each editor 600, viewer 602. The Design Time Data Model 608 also fires events to modules 601 in response to changes in the model 608, as well as collaborating/communicating with the other modules 601 (module 601-module 601 interaction) by notifying respective modules 601 when the data model 608 has changed. The data model 608 depends on an interface in order to serialize model 608 content retrieval and storage to and from the memory 210.

The above describes the mechanism used by the tool 116 editors 600 and viewers 602 to interact with the models 608,610,300. The EMF.Edit framework is an optional framework provided by the Eclipse framework. The tool 116 can use the EMF.Edit framework and generated code (for exmple) as a bridge or coupling 613 between the Eclipse UI framework and the tool models 608,610,300. Following the Model-View-Controller pattern, the editors 600 and viewers 602 do not know about the models 608,610,300 directly but rely on interfaces to provide the information needed to display and edit.

### Mapping Model 300

Referring to Figure 3, the source message structure 302 defines the relationship of content in the application messaging between the application gateway AG and the backend operation of the data sources 106. The device message structure 304 defines the relationship of the content in the application messaging between the device 100 and the application gateway AG. The mapping model 300 is built by the mapping module 629 using knowledge of the data structures of the backend 308 and those data structures 306 used by the device 100 (for example as represented in the design data model 608) to implement a series of mappings or "cross mappings" 310 between the two dissimilar data structures 306,308, as further described below. The mapping module 629 helps to generate mapping information 310 based on a defined application/device message structure 304 (and related data structure 308) by matching with the corresponding data source message structure 302 (and related data structure 306). The structures 304,308 are provided by the design model 608, i.e. the application 105 model. The application developer creates the mapping model 300 using the module 629 of the tool 116, whereby the gateway AG utilizes this mapping model 300 information during communication of the application 105 request/response messages between the runtime RE, of the devices 100, and the data sources 106. The mapping model 300 can be generated as an annotation to the data source 106 schema, or for example the mapping model 300 can be persisted as a separate file instead. For example, the data source 106 description will be a WSDL schema of the web-service 106. Further, there may be multiple mapping models 300 in the case where more than one backend data source 106 is utilized by the application 105. All such mapping models 300 can be grouped together within a mappings folder (not shown) and can be named according to the data source 106 service name, e.g. mappings/WeatherService.wsd1 and mappings/AirlineBookingSystem.wsdl.

Referring to Figure 4, an example of web service complex structure 308 (e.g. Product 309) is given that contains two additional structures, Billing Options 312 and Category 314. The device Product structure 309 having multiple data layers is flattened, with simple fields only (e.g. one data layer or at least fewer that the number of layers in the structure 309), the additional layers are removed. Fields from Billing Options Structure 312 and Category Structure 314 are present as simple fields on flattened Product Structure 316 of the simplified data structure 306. Mappings 310 are used by the model 300 to represent the cross relationships between the data structures 306,308, as implemented in the respective message structures 304,302.

As further described below, the data structures 306,308 representing the data content of the message structures 302,304 can be represented as such as but not limited to a tree representation. The data structures 306,308 can be defined as a specialized format for organizing and storing data. General data structure types can include an array, a file, a record, a table, the tree, and so on. Any data structure is designed to organize data to suit a specific purpose so that it can be accessed and worked with in appropriate ways. In computer programming, the data structure may be selected or designed to store data for the purpose of working on it with various algorithms. The tree data structure 306,308 is used for placing and locating records/keys in the model 300. The tree data structure 306,308 is used to find data of the structure 306,308 by repeatedly making choices at decision points called nodes. A node can have as few as two branches (also called children), or as many as several dozen. The structure is straightforward, but in terms of the number of nodes and children, a tree can be gigantic. In the tree data structure 306,308, records are stored in locations called leaves. This name derives from the fact that records always exist at end points; there is nothing beyond them. The starting point is called the root. The maximum number of children per node is called the order of the tree data structure 306,308. The maximum number of access operations required to reach the desired record is called the depth. The order can be the same at every node and the depth can be the same for every record. Other trees have varying numbers of children per node, and different records might lie at different depths. The mappings 310 are the structure 306,308 transformations that allow the application gateway to transform the back-end message structure 302 to a device message structure 304 and vice vera. It is recognised that the above described tree structures could be substituted by such as but not limited to other similar array, file, and table constructs, as desired.

For the tool 116, the tree viewer 602 can use a TreeContentProvider and LabelProvider interface to query the structure of the tree representation and get text and icons for each node in the tree respectively. Table viewers 602 and list viewers 602 work in a similar way but use the structured ContentProvider and LabelProvider interfaces. Each class in the data model 300 can be a change notifier, that is, anytime an attribute or reference is changed an event is fired. In EMF, for example, a notification observer is called an adapter because not only does it observe state changes but it can extend the behaviour of the class it is attached to (without subclassing) by supporting additional interfaces. An adapter is attached to a model object by an adapter factory. An adapter factory is asked to adapt an object with an extension of a particular type. The adapter factory is responsible for creating the adapter or returning an existing one, the model object does not know about adapting itself. The tool 116 uses EMF to generate a set of adapters for the data model 300 called item providers. Each item provider is an adapter that implements provider interfaces to extend the behaviour of the model 300 object so it can be viewed and edited and at the same time is a notification observer that can pass on state changes to listening views. The tool 116 connects the editors 600 and viewers 602 to the model 300 by configuring the editors 600 and viewers 602 with one or more EMF.Edit classes, for example. Each EMF.Edit class supports an Eclipse UI provider interface. The EMF.Edit class implements an interface call by delegating to an adapter factory. The adapter factory then returns a generated adapter (an item provider) that knows how to access the model 300. When the state of the model 300 changes the same adapters are used to update the viewers 602 and editors 600.

### Service Layer 614

Referring again to Figure 6, a service layer 614 provides facilities for the UI layer 606 such as validation 620, localization 624, generation 622, build 626, mapping module 629 and deployment 628, further described below. The tool 116 can make use of the Eclipse extension point mechanism to load additional plug-ins for two types of services: backend connectors 616 and device skin managers 618 with associated presentation environments 630.

The backend connector 616 defines an Eclipse extension point to provide for the tool 116 to communicate with or otherwise obtain information about different backend data sources 106, in order to obtain the message format (e.g. as provided by WSDL definitions) of the selected data source 106. The backend connector 616 can be used as an interface to connect to and to investigate backend data source 106 services such as Web Services and SQL Databases. The backend connector 616 facilitates building a suitable application message and data set to permit communication with these services from the application 105 when running on the device 100. The backend connector 616 can support the access to multiple different types of data sources 106, such as but not limited to exposing respective direct communication interfaces through a communication connector based architecture. At runtime the tool 116 reads the plug-in registry to add contributed backend extensions to the set of backend connectors 616, such as but not limited to connectors for Web Services.

The Backend Connector 616 can be responsible for such as but not limited to: connecting to a selected one (or more) of the backend data sources 106 (e.g. Web Service, Database); providing an interface for accessing the description of the backend data source 106 (e.g. messages, operations, and data types); and/or providing for the identification of Notification services (those which push notifications over the network 10 to the device 100 - see Figure 1). The Backend Connector 616 can provide an interface to the backend data source 106 (e.g. a web service, SQL Database or other) for access of the data source 106 description, and can provide a level of abstraction between implementation specific details of the backend messaging and generic messaging descriptions in the mapping model 300. For example, the Backend Connector 616 can be used to generate appropriate messaging 404 and data 400 component (e.g. data elements) sets for the application 105, and is used by the Model Validator 620 as part of validation tasks to verify the sanity of existing message mapping relationships in the mapping model 300 and/or other models 608,610 under development. For example, the backend connector 616 can be implemented as an interface using an API call as the protocol to access the underlying backend data source 106 (e.g. using a WSDL Interface for WebServices). It is recognised that the data source 106 information accessed through the connector 616 is used to help construct the mappings model 300, as further described below.

The device skin manager 618 defines an Eclipse extension point, for example, to allow the tool 116 to emulate different devices 100 (see Figure 1), such that the look and feel of different target devices 100 (of the application 105) can be specified. At runtime the tool 116 reads the plug-in registry to add contributed skin extensions or presentation environments 630 to the set of device environments 630 coordinated by the manager 618, such as but not limited to environments 630 for a generic BlackBerry TM or other device 100. The Skin Manager 618 is used by the Testing/Preview viewer 806 to load visual elements of the data model 608,610 that look appropriate for the device 100 that is being emulated, i.e. elements that are compatible with the specified environment 630. Different skins or presentation environments/formats 630 are "pluggable" into the manager 618 of the tool 116, meaning that third parties can implement their own presentation environments 630 by creating new unique Skinlds (an Eclipse extension point), for example, and implementing an appropriate interface to create instances of the screen elements supported by the runtime environment RE of the emulated device 100. In order to load a new presentation environment 630, the Testing/Preview viewer 806 first asks the Manager 618 for an instance of the specified environment 630. The Manager 618 then instantiates the environment 630 and the Testing/Preview viewer 806 uses the specified environent 6320 to construct the screen elements according to the screen components of the model 608,610. For example, the presentation environments 630 (e.g. SkinPlugins) are identified to the SkinManager 618 through a custom Eclipse extension point using the Eclipse framework.

The model validation 620 of the service layer 614 provides facilities for the UI layer 606 such as validating the design time data model 608 and/or the mapping model 300. The ModelValidator 620 is used to check that the representation of application 105 messages is in line with the backend data source 106 presentation of messaging operations. The Model Validator 620 can be responsible to validate the model 608 representation of the application 105 to be generated, for example such as but not limited to elements of: workflow sanity of the workflow component 406; consistency of parameters and field level mappings of the components 400, 402, 404, 406; screen control mappings and screen refresh messages of the screen components 402; message and/or data duplications inter and intra component 400,402,404,406. Another function of the validation 620 can be to validate the model's 300 representation of backend data source 106 messaging relationships. In order to achieve its responsibilities, the validator collaborates with the Design Time Data Model 608, the mapping model 300, the message structures 302, 304, an application generator 622 and the backend connector 616. The Model Validator 620 utilizes as part of the validation task the Design Time Data Model 608 (for application 105 validation) and the message structures 302, 304 (for model 300 validation), as well as the backend connector 616, which supports the interface to the backend data sources 106.

Referring again to Figure 6, the localization Service 624 has responsibilities such as but not limited to: supporting a build time localization of user visible strings; supporting additional localization settings (e.g. default time & date display format, default number display format, display currency format, etc); and creating the resource bundle files (and resources) that can be used during preparation of the deployable application 105 (e.g. an application jar file) by a BuildService 626. For example, the localization service 624 can be implemented as a resource module for collecting resources that are resident in the design time data model 608 for inclusion in the deployable application 105. The JAR file can be a file that contains the class, image, and sound files for the application gathered into a single file and compressed for efficient downloading to the device 100. The Localization Service 624 is used by the application Generator 622 to produce the language specific resource bundles, for example. The BuildService 626 implements preparation of the resource bundles and packaging the resource bundles with the deployable application 105. The Localization Service 624 interacts (provides an interface) with the tool editors 600 and viewers 602 for setting or otherwise manipulating language strings and locale settings of the application 105.

Referring to Figure 6, the Generator 622 can be responsible for, such as but not limited to: generation of the application XML from the components 400,402,404; generation of mapping model 300 descriptors (including the mappings 310); optimizing field ordering of the component 400,402,404 descriptors; and generation of dependencies and script transformation as desired for storage in the memory 210. The Generator 622 collaborates with the Design Time Data Model 608 to obtain the content of the developed components 400, 402,404 comprising the application 105, as well as cooperating with the mapping model 300 to generate the mappings 310 in the model 300 for use by the application gateway AG. The Generator 622 utilizes the Model Validator 620 to check that both the application 105 definitions (of the components 400,402,404,406) and mapping model 300 description information are correct. The Generator 620 then produces the XML code of the application 105, with inclusions and/or augmentations of the script of the workflow components 406, and/or the mapping model 300 file descriptors (used by the application gateway AG). The Generator 622 uses the Localization Service 624 to produce the language resource bundles, through for example a Resource Bundles interface (not shown). The Generator 622 generation process can be kicked off through a Generate interface accessed by the developer using the UI 202 of the tool 116 (i.e. by user input events such as mouse clicks and/or key presses). It is recognised that the generator 622 can be configured as a collection of modules, such as but not limited to a code module for generating the XML (which may include associated script) and a mappings module for generating the mapping model 300 descriptors. It is recognised that the mappings model 300 can be developed while the application 105 is in development, or can be developed once the application 105 development is complete.

The deployment service 628 is used to deploy the appropriate application 105 descriptor file with respect to the repository 114 and registry 112 and/or to deploy the mappings module 300 for use by the application gateway AG. The Build Service 626 provides a mechanism for building the deployable form of the application 105 and/or the mappings module 300. The Build Service 626 produces via a build engine the deployable application 105 file and/or the mappings module 300 file. These files are made available to the deployment service 628 via an output interface of the tool 116. The security service 632, has the ability to sign the application 105 file and/or the mapping model 300 file to prevent tampering with their contents, and to provide the identity of the originator. There can be two example options for signing, either making use of DSA with SHA1 digest, or RSA with MD5, as is know in the art. For example, the security service 632 can handle certificates that are used for application 105 and/or mapping model file signing. The security service 632 can have the ability to request, store and use a public/private key pair to help ensure the validity of both the originator and content of the application 105 and/or mapping model 300 files as deployed. The model 300 can be defined as a framework for organizing and representing messaging information used by the application gateway AG to facilitate communication between the device 100 and the data source 106.

### Operation of Mapping Module 629

The message structure 302 and associated data structure 308 can contain complex data structures containing many levels of nesting (e.g. multidimensional data structures comprising nested arrays), which can introduce a significant memory overhead on wireless devices 100. This complex data representation can also reflect on performance when accessing such data in the persistent store 210 (see Figure 2) of the device 100. The mapping module 629 acts to remove or otherwise simplify the message structure 302 and thus flatten (see Figure 4) the message and associated data for use in the device message structure 304. This flattening can help improve processing efficiency on the device 100 as well as persistent store 210 performance. Accordingly, the mapping module 629 is employed by the visual development tool 116 to assist the developer to provide detailed "cross mappings" 310 between data source described message structures 302 and the optimized appearance of message structures 304 delivered to the device 100, through a mapping process driven by the wireless application 105 messaging 304 and related data 306 structures.

Typical complex data structures can include the array, the stack, the linked list, the tree, and also "classes, for example, used to represent the physical and/or logical relationships among data elements of the structure for supporting support specific data manipulation functions. The linked list is a sequential collection of structures, connected or "linked" by pointers. Linked lists can be more flexible than arrays for holding lists of items. The linked list can grow as necessary while the array can be limited to the fixed number of elements initially declared. The pointer contains a memory address of a variable; the variable contains a specific value. It is recognised that the array data structure can be different from the linked list data structure because the programmer deals only with the array positions and the computer hides all memory aspects. With linked lists, on the other hand, the programmer deals with some memory aspects--pointers. Thus, the linked list data structure, by its very nature, can have a physical aspect beyond the logical: memory address manipulation, by pointers. It is recognised that the above examples can be considered example descriptions of data structures 306,308.

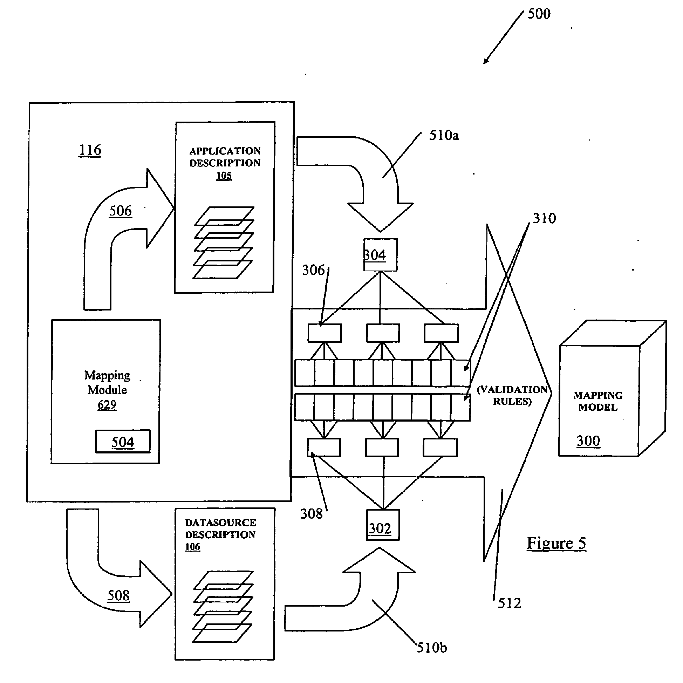

Referring to Figure 5, the top down mapping process 500 allows the developer to link fields in any configuration (subject to acceptable type conversions), link entire complex structures based on analysis of common definitions between the data structures 306,308, and help enforce minimal data requirements to satisfy basic request or response demands of the related messaging structures 302,304. The mapping process 500 is driven by the structure of the wireless message elements of the application 105, of any complexity, and the process 500 produces the mapping model 300, which includes flexible and optimized cross-mappings 310 so that selective data can be extracted from complex types and passed to and from an optimized message structure 306 schema as expected by the wireless application 105. The mapping module 629 can be integrated in the tool 116 and can make use of various artifacts for enforcing efficiency, flexibility and consistency with any previous mapping process utilized by the developed application 105. The mapping module 629 uses a mapping XML schema specification 504 (i.e. mapping format - see Appendix A) to guide the generation of the mapping model 300, the application 105 description (including the structure 304), and the data source 106 description (e.g. WSDL specification of the structure 302). The mapping module 629 selects 506 the application 105 and selects 508 the data source 106.

Basically, the mapping process 500 consists in two main iterative steps. The first step is an initial transformation 510a of the wireless application message structure 304 and transformation 510b of the data source message structure 302 to the corresponding respective data structures 306,308, e.g. tree representations (see Figure 8 for an example tree representation of the application message content and respective fields). The wireless application message content may have data fields of complex types, which have fields of type enumeration or simple/complex type, etc, which would be represented in the data structure 306. Similarly, the data source message content has parts, which can resolve recursively to an element or a simple/complex type, as per XML schema specification 504, which would be represented in the data structure 308. After this initial transformation of the target structures, the mapping module 629 attempt to resolve in the data structures 306,308, based on a set of validation rules.

The second step 512 is an iterative sub-process of producing mappings 310 for an element in the wireless tree structure 306 to a matching element of the data source tree structure 308. The artifacts and validation rules used by the module 629 can be such as but not limited to:
1. an already mapped wireless element cannot be mapped again;
2. the module 629 allows the link (mapping 310) between 2 complex structures only if these complex structures match in terms of cardinality and of type compatibility;
3. the user interface 202 allows the developer to produce the mappings 310 of two compatible structures and automatically generates all the mappings 310 for the fields (children nodes in the tree) up to the wireless elementary fields;
4. the mapping process 500 cannot complete unless all of the wireless elementary fields (leaf nodes in the wireless message tree) are mapped. This can be a powerful way of enforcing the efficiency in wireless applications 105 by optimizing the device 100 traffic, since un-necessary wireless elements/fields passed back and forth between the device 100 and the data source 106 are minimized; and
5. an eventual previous mapping 310 between the wireless message structure 304 and the data source message structure 302 is displayed on the interface 202 of the tool 116. The wireless developer has the possibility of changing the existing mappings 310 or of cross-linking or of the deletion altogether of the existing mapping 310. In this situation, the mappings 310 generated can take precedence and the old mappings 310 can be overwritten, as represented in the mapping model 300 generated by the generator 622.

It is recognised in the above example operation 500 the application 105 description (including the structure 304) and the data source 106 description (e.g. WSDL specification of the structure 302) are compared or otherwise validated to produce the mappings 310 included in the mapping model 300 used by the application gateway AG during message brokering of the communications 302,304 between the data source 106 and the device 100.

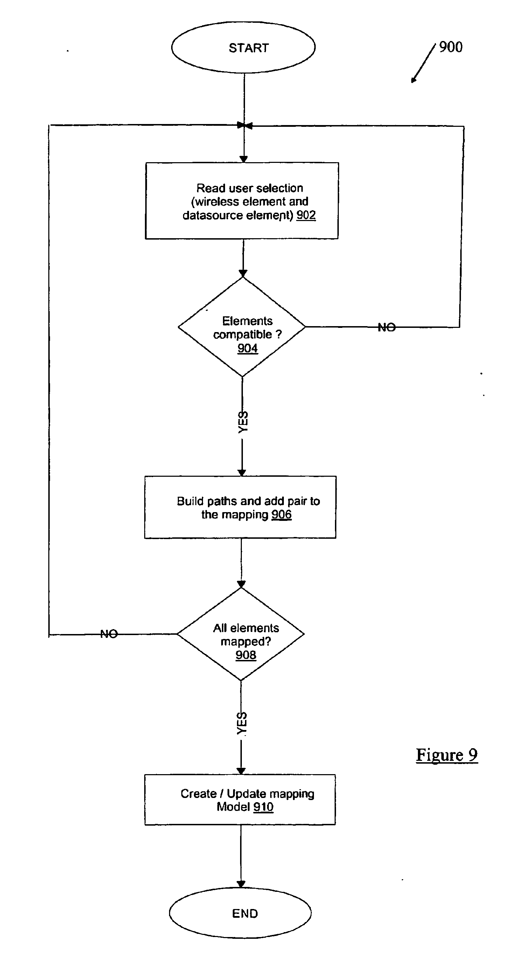

Referring to Figure 9, the process 900 further describes operation of the module 629: selection 902 of the data source 106 and the application 105; determining 904 comparable elements between the structures 306,308; building 906 the mappings 310; checking 908 if all elements of the structures 306,308 are mapped; and generating/updating the mapping model 300.

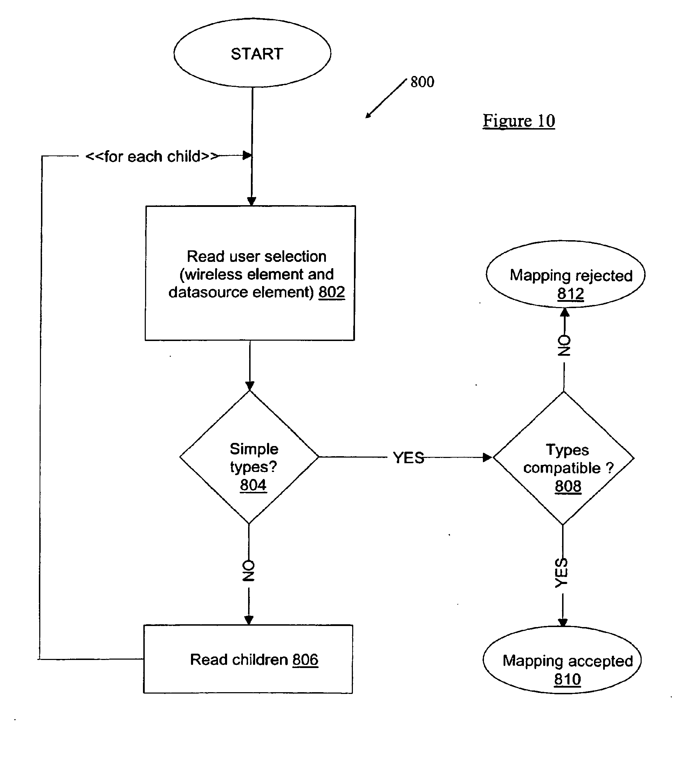

Referring to Figure 10, the process 800 describes: reading 802 the user selection of the data source 106 and the application 105; determining 804 whether simple types are available in the structures 306,308; if no then continue reading 806 children of the nodes; if yes then determine 808 if the types in the structures 306,308 are compatible; if yes then the mapping 310 is accepted and written 810 to the model 300; if no then the mapping 310 is rejected 812. All nodes of the structures 306,308 can be read in a similar fashion as described above in order to generate the complete set of mappings 310 used in the model 300.

### Mapping 310 Example

The following is an example of the model 300 generated by the module 629. For a given wireless application message structure 304, the mappings 310 to the data source message structure 302 is generated as per the example mapping format given in Appendix A.

```
  <?xml version="1.0" encoding="ASCII"?>
  <map:wiclet xmlns:hftp="http://schemas.xmlsoap.org/wsdl/http/"
  xmlns:map="http://com.rim.wica/mapping.xsd"
  xmlns:mime="http://schemas.xmlsoap.org/wsdl/mime/"
  xmlns:s="http:/www.w3.org/2001/XMLSchema" xmlns:s0="http://www.serviceobjects.com/"
  xmlns:tm="http://microsoft.com/wsdl/mime/textMatching/">
   <map:component map:mapName="s0:GetWeatherByZipSoapln" map:mapType="message"
  map:name="outGetWeatherByZipSoapln" map:secure="false">
   <map:field map:mapName="parameters/s0:PostalCode" map:mapType="element"
  map:name="parameters/PostalCode"/>
   <map:field map:mapName="parameters/s0:LicenseKey" map:mapType="element"
  map:name="parameters/LicenseKey"/>
   </map:component>
   <map:component map:mapName="s0:GetWeatherByZipSoapOut" map:mapType="message"
  map:name="inGetWeatherByZipSoapOut" map:secure="false">
    <map:field map:mapName="parameters/s0:GetWeatherByZipResult/s0:Error/s0:Desc"
  map:mapType="element" map:name="parameters/Error/Desc"/>
   <map:field map:mapName="parameters/s0:GetWeatherByZipResult/s0:Error/s0:Number"
  map:mapType="element" map:name="parameters/Error/Number"/>
   <map:field map:mapName="parameters/s0:GetWeatherByZipResult/s0:Error/s0:Location"
  map:mapType="element" map:name="parameters/Error/Location"/>
   <map:field map:mapName="parameters/s0:GetWeatherByZipResult/s0:LastUpdated"
  map:mapType="element" map:name="parameters/LastUpdated"/>
   <map:field map:mapName="parameters/s0:GetWeatherByZipResult/s0:TemperatureF"
  map:mapType="element" map:name="parameters/TemperatureF"/>
   <map:field map:mapName="parameters/s0:GetWeatherByZipResult/s0:Windchill"
  map:mapType="element" map:name="parameters/Windchill"/>
   <map:field map:mapName="parameters/s0:GetWeatherByZipResult/s0:HeatIndex"
  map:mapType="element" map:name="parameters/Heatindex"/>
   <map:field map:mapName="parameters/s0:GetWeatherByZipResult/s0:Humidity"
  map:mapType="element" map:name="parameters/Humidity"/>
   <map:field map:mapName="parameters/s0:GetWeatherByZipResult/s0:Dewpoint"
  map:mapType="element" map:name="parameters/Dewpoint"/>
   <map:field map:mapName="parameters/s0:GetWeatherByZipResult/s0:Wind"
  map:mapType="element" map:name="parameters/Wind"/>
   <map:field map:mapName="parameters/s0:GetWeatherByZipResult/s0: Pressure"
  map:mapType="element" map:name="parameters/Pressure"/>
   <map:field map:mapName="parameters/s0:GetWeatherByZipResult/s0:Conditions"
  map:mapType="element" map:name="parameters/Conditions"/>
   <map:field map:mapName="parameters/s0:GetWeatherByZipResult/s0:Visibility"
  map:mapType="element" map:name="parameters/Visibility"/>
   <map:field map:mapName="parameters/s0:GetWeatherByZipResult/s0:Sunrise"
  map:mapType="element" map:name="parameters/Sunrise"/>
   <map:field map:mapName="parameters/s0:GetWeatherByZipResult/s0:Sunset"
  map:mapType="element" map:name="parameters/Sunset"/>
   <map:field map:mapName="parameters/s0:GetWeatherByZipResult/s0:City"
  map:mapType="element" map:name="parameters/City"/>
   <map:field map:mapName="parameters/s0:GetWeatherByZipResult/s0:State"
  map:mapType="element" map:name="parameters/State"/>
   <map:field map:mapName="parameters/s0:GetWeatherByZipResult/s0:Moonrise"
  map:mapType="element" map:name="parameters/Moonrise"/>
   <map:field map :mapName= "parameters/s0:GetWeatherByZipResult/s0:Moonset"
  map:mapType="element" map:name="parameters/Moonset"/>
   <map:field map:mapName="parameters/s0:GetWeatherByZipResult/s0:Precipitation"
  map:mapType="element" map:name="parameters/Precipitation"/>
   <map:field map:mapName="parameters/s0:GetWeatherByZipResult/s0:Country"
  map:mapType="element" map:name="parameters/Country"/>
   </map:component>
   <map:portType map:name="s0:DOTSFastWeatherSoap">
    <map:operation map:name="GetWeatherByZip">
     <map:input map:component="outGetWeatherByZipSoapln"/>
     <map:output map:component="inGetWeatherByZipSoapOut"/>
    </map:operation>
   </map:portType>
  </map:wiclet>
```

Therefore, the above described tool 116 and associated method of operation for generating the mapping model 300 to transform message communications between the first message structure 304 and the second message structure 302. The first message structure 304 configured for use by the client device 100 and the second message structure 302 for use by the data source 106, such that the data source 106 is configured for network communication with the client device 100 through implementation of the mapping model 300. One example implementation is for the application gateway AG to host the mapping model 300. Another example implementation is for either the client device 100, the data source 106, or a combination thereof to host the mapping model 300. The tool 116 and associated operation include: an application module (i.e. the design time model 608) for providing a description of the first message structure 304, the first message structure 304 including at least one client message data element for arranging in the first data structure 306; a data source module (i.e. the backend connector 616) for providing a description of the second message structure 302, the second message structure 302 including a plurality of data source message data elements for arranging in the second multiple layer data structure 308, the multiple layers of the second data structure 308 for representing relationships between the data source data elements; and the mapping module 629 for generating at least one mapping descriptor 310 of the mapping model 300 by comparing the first data structure 306 and the second data structure 308, the mapping descriptors 310 for linking the at least one client message data element of the first data structure 306 to at least one of the data source message data elements of the second data structure 308, such that a number of layers in the first data structure 306 is not greater than (i.e. less than or equal to) the number of layers in the second data structure 308. The mapping model 300 including the mapping descriptors 310 is subsequently used for monitoring message communication between the client device 100 and the data source 106.

### Appendix A- Example Mapping XML schema

```
 <?xml version="1.0" encoding="UTF-8"?>
 <xsd:schema targetNamespace="http://com.rim.wica/mapping.xsd"
 xmlns:map="http://com.rim.wica/mapping.xsd" xmlns:xsd="http://www.w3.org/2001/XMLSchema">
       <xsd:simpleType name="ComponentMapType">
               <xsd:restriction base="xsd:NCName">
                      <xsd:enumeration value="message"/>
                      <xsd:enumeration value="complexType"/>
                      <xsd:enumeration value="element"/>
               </xsd:restriction>
       </xsd:simpleType>
       <xsd:simple Type name="FieldMapType">
               <xsd:restriction base="xsd:NCName">
                      <xsd:enumeration value="part"/>
                      <xsd:enumeration value="simpleType"/>
                      <xsd:enumeration value="element"/>
                      <xsd:enumeration value="attribute"/>
                      <xsd:enumeration value="any"/>
                      <xsd:enumeration value="anyAttribute"/>
               </xsd:restriction>
       </xsd:simpleType>
       <xsd:complexType name="ComponentReference">
               <xsd:attribute name="component" type="xsd:string"/>
       </xsd:complexType>
       <xsd:element name="ComponentReference" type="map:ComponentReference"/>
       <xsd:complexType name="ComponentType">
               <xsd:sequence>
                      <xsd:element name="fields" type="map:FieldType" minOccurs="0"
 maxOccurs="unbounded"/>
               </xsd:sequence>
               <xsd:attribute name="mapName" type="xsd:string"/>
               <xsd:attribute name="mapType" type="map:ComponentMapType"
 default="message"/>
               <xsd:attribute name="name" type="xsd:string"/>
               <xsd:attribute name="secure" type="xsd:string" default="false"/>
       </xsd:complexType>
       <xsd:element name="ComponentType" type="map:ComponentType"/>
       <xsd:complexType name="ConnectorType">
               <xsd:sequence>
                      <xsd:element name="any" type="xsd:string" nillable="true"
 minOccurs="0"/>
                      <xsd:element name="anyAttribute" type="xsd:string" nillable="true"
 minOccurs="0" maxOccurs="unbounded"/>
               </xsd:sequence>
               <xsd:attribute name="name" type="xsd:string" defauft="SOAPCONNECTOR"/>
       </xsd:complexType>
       <xsd:element name="ConnectorType" type="map:ConnectorType"/>
       <xsd:complexType name="CorrelationType">
               <xsd:attribute name="field" type="xsd:string"/>
       </xsd:complexType>
       <xsd:element name="CorrelationType" type="map:CorrelationType"/>
       <xsd:complexType name="DocumentRoot">
               <xsd:sequence>
                      <xsd:element name="mixed" type="xsd:string" nillable="true"
 minOccurs="0" maxOccurs="unbounded"/>
               </xsd:sequence>
         </xsd:complexType>
         <xsd:element name="DocumentRoot" type="map:DocumentRoot"/>
         <xsd:oomplexType name="EnumerationType">
                <xsd:sequence>
                       <xsd:element name="literals" type="map:LiteralType"
 maxOccurs="unbounded"/>
                </xsd:sequence>
                <xsd:attribute name="mapName" type="xsd:string"/>
                <xsd:attribute name="name" type="xsd:string"/>
        </xsd:complexType>
        <xsd:element name="EnumerationType" type="map:EnumerationType"/>
        <xsd:complexType name="FieldType">
                <xsd:attribute name="mapName" type="xsd:string"/>
                <xsd:attribute name="mapType" type="map:FieldMapType" default="part"/>
                <xsd:attribute name="name" type="xsd:string"/>
        </xsd:complexType>
        <xsd:element name="FieldType" type="map:FieldType"/>
        <xsd:complexType name="FilterType">
                <xsd:attribute name="component" type="xsd:string"/>
                <xsd:attribute name="expression" type="xsd:string"/>
        </xsd:complexType>
        <xsd:element name="FilterType" type="map:FilterType"/>
        <xsd:complexType name="ImplicitMapType">
                <xsd:attribute name="component" type="xsdatring"/>
                <xsd:attribute name="operation" type="xsdatring"/>
                <xsd:attribute name="portType" type="xsd:string"/>
        </xsd:complexType>
        <xsd:element name="ImplicitMapType" type="map:ImplicitMapType"/>
        <xsd:complexType name="InputType">
                <xsd:complexContent>
                       <xsd:extension base="map:ComponentReference">
                               <xsdaequence>
                                      <xsd:element name="correlations"
 type="map:CorrelationType" minOccurs="0" maxOccurs="unbounded"/>
                              </xsdaequence>
                       </xsd:extension>
                </xsd:complexContent>
        </xsd:complexType>
        <xsd:element name="InputType" type="map:lnputType"/>
        <xsd:complexType name="LiteralType">
               <xsd:attribute name="mapValue" type="xsd:string"/>
               <xsd:attribute name="value" type="xsd:string"/>
        </xsd:complexType>
        <xsd:element name="LiteralType" type="map:LiteralType"/>
        <xsd:complexType name="OperationType">
               <xsd:sequence>
                       <xsd:element name="input" type="map:InputType"/>
                       <xsd:element name="output" type="map:ComponentReference"/>
                       <xsd:element name="bindingInputHeader" type="map:InputType"
 minOccurs="0"/>
               </xsd:sequence>
               <xsd:attribute name="name" type="xsd:string"/>
        </xsd:complexType>
        <xsd:element name="OperationType" type="map:OperationType"/>
        <xsd:complexType name="PortType">
               <xsd:sequence>
                       <xsd:element name="operations" type="map:OperationType"
 minOccurs="0" maxOccurs="unbounded"/>
               </xsd:sequence>
                <xsd:attribute name="name" type="xsd:string"/>
        </xsd:complexType>
        <xsd:element name="PortType" type="map:PortType"/>
        <xsd:complexType name="SubscriptionType">
                <xsd:sequence>
                       <xsd:element name="filter" type="map:FilterType" minOccurs="0"/>
                       <xsd:element name="notification" type="map:ComponentReference"/>
                       <xsd:element name="subscribe" type="map:ImplicitMapType"/>
                       <xsd:element name="unsubscribe" type="map:ImplicitMapType"/>
                       <xsd:element name="subscriptionEnd" type="map:ImplicitMapType"/>
                </xsd:sequence>
                <xsd:attribute name="expiryDelta" type="xsd:string"/>
        </xsd:complexType>
        <xsd:element name="SubscriptionType" type="map:SubscriptionType"/>
        <xsd:complexType name="WicletType">
               <xsd:sequence>
                       <xsd:element name="connector" type-='map:ConnectorType"/>
                       <xsd:element name="enumerations" type="map:EnumerationType"
 minOccurs="0" maxOccurs="unbounded"/>
                       <xsd:element name="components" type="map:ComponentType"
 maxOccurs="unbounded"/>
                       <xsd:element name="portTypes" type="map:PortType"
 maxOccurs="unbounded"/>
                       <xsd:element name="subscription" type="map:SubscriptionType"
 minOccurs="0" maxOccurs="unbounded"/>
               </xsd:sequence>
        </xsd:complexType>
        <xsd:element name="WicletType" type="map:WicletType"/>
 </xsd:schema>
```

## Claims

1. A system for generating a mapping model (300) to transform and monitor message communications between a first message format and a second message format, the first message format configured for use by a client and the second message format for use by a data source (106), the data source configured for network communication with the client through implementation of the mapping model, the system comprising:
an application module (608) for providing a description of the first message format, the first message format comprising at least one client message element for arranging in a first data structure;
a data source module (616) for providing a description of the second message format, the second message format comprising a plurality of data source message elements for arranging in a second multiple layer data structure, the multiple layers of the second data structure for representing relationships between the data source message elements;
a mapping module (629) for generating at least one mapping descriptor of the mapping model by comparing the first data structure (306) and the second data structure (308), the mapping descriptors for linking the at least one client message element of the first data structure to a plurality of the data source message elements of the second data structure when the number of layers in the second data structure is greater than a number of layers in the first data structure;
wherein the mapping model (300) comprising the mapping descriptors is used subsequently for monitoring message communication between the client and the data source.

2. The system of claim 1 in which the client device is wirelessly connected to the network.

3. The system of claim 1, 2 or 3, wherein the second data structure comprises any of: an array structure; a stack structure; a linked list structure; a tree structure; or a class structure.

4. The system of claim 1, 2 or 3, wherein the mapping model (300) descriptors map the message elements of web service messages to the message elements of client device messages, the client device (100) in communication with the web service, the web service is the data source using the second message format and the client device (100) uses the first message format.

5. The system of any one of claims 1 to 4, wherein the application module obtains the description of the first message format from message components of an application expressed in a structured definition language, the application configurable for execution on the client device(100).

6. The system of any one of claims 1 to 5, wherein the data source module (616) obtains the description of the second message format from message components of a web service interface expressed in a structured definition language.

7. The system of claim 6 further comprising a connector module for accessing the description of the web service interface over the network.

8. The system of claim 7 further comprising a plurality of the mapping models (300) configured for message communication of the client device (100) with multiple respective web services.

9. The system of any one of claims 1 to 8, wherein the mapping model is configured to map message elements of the first and second message formats comprising any of: linking data fields subject to acceptable type conversions; link entire complex data structures based on common definitions between the first and second data structures; or enforce predefined data requirements for satisfying messaging demands of related messaging structures.

10. The system of any one of claims 1 to 9 further comprising a mapping schema expressed in a structured definition language to guide generation of the mapping model by the mapping module (629).

11. The system of any one of claims 1 to 10 further comprising a set of validation rules used by the mapping module (629) comprising any of: an already mapped message element cannot be mapped again; mapping descriptors representing mapping between 2 complex data structures can only be generated if these complex data structures match in terms of cardinality and of type compatibility; the mapping descriptors are generated for two compatible data structures for data fields up to the respective elementary fields; the mapping descriptors are not complete unless all of the elementary fields of the data structures are mapped; or an eventual previous mapping descriptor between the first data structure and the second data structure is displayed on a graphical interface.

12. A method for generating a mapping model (300) to transform and monitor message communications between a first message format and a second message format, the first message format configured for use by a client and the second message format for use by a data source (106), the data source configured for network communication with the client through implementation of the mapping model, the method comprising the steps of:
obtaining a description of the first message format, the first message format comprising at least one client message element for arranging in a first data structure (306);
obtaining a description of the second message format, the second message format comprising a plurality of data source message elements for arranging in a second multiple layer data structure (308), the multiple layers of the second data structure for representing relationships between the data source message elements;
generating at least one mapping descriptor of the mapping model by comparing the first data structure (306) and the second data structure (308), the mapping descriptors for linking the at least one client message element of the first data structure (306) to a plurality of the data source message elements of the second data structure (308) when the number of layers in the second data structure is greater than a number of layers in the first data structure;
wherein the mapping model comprising the mapping descriptors is used subsequently for monitoring message communication between the client and the data source.

13. The method of claim 12 in which the client device is wirelessly connected to the network.

14. The method of claim 12 or 13, wherein the second data structure (308) comprises any of: an array structure; a stack structure; a linked list structure; a tree structure; or a class structure.

15. The method of claim 12, 13 or 14, wherein the mapping model descriptors map the message elements of web service messages to the message elements of client device messages, the client device (100) in communication with the web service, the web service is the data source using the second message format and the client device (100) uses the first message format.

16. The method of any one of claims 12 to 15, wherein the description of the first message format is obtained from message components of an application expressed in a structured definition language, the application configurable for execution on the client device (100).

17. The method of any one of claims 12 to 15, wherein the description of the second message format is obtained from message components of a web service interface expressed in a structured definition language.

18. The method of claim 17 further comprising the step of accessing the description of the web service interface over the network.

19. The method of claim 18 further comprising the step of generating a plurality of the mapping models configured for message communication of the client device with multiple respective web services.

20. The method of any one of claims 12 to 19, wherein the mapping model is configured to map message elements of the first and second message formats comprising any of: linking data fields subject to acceptable type conversions; link entire complex data structures based on common definitions between the first and second data structures; or enforce predefined data requirements for satisfying messaging demands of related messaging structures.

21. The method of any one of claims 12 to 20 further comprising the step of applying a mapping schema expressed in a structured definition language to guide generation of the mapping model.

22. The method of any one of claims 12 to 21 further comprising the step of applying a set of validation rules used in generating the model descriptors, the validation rules comprising any of: an already mapped message element cannot be mapped again; mapping descriptors representing mapping between 2 complex data structures can only be generated if these complex data structures match in terms of cardinality and of type compatibility; the mapping descriptors are generated for two compatible data structures for data fields up to the respective elementary fields; the mapping descriptors are not complete unless all of the elementary fields of the data structures are mapped; or an eventual previous mapping descriptor between the first data structure and the second data structure is displayed on a graphical interface.

23. A computer program product for generating a mapping model to transform message communications between a first message format and a second message format, the first message format configured for use by a client and the second message format for use by a data source, the data source configured for network communication with the client through implementation of the mapping model, the computer program product comprising: a computer readable medium comprising program code means executable by a processor of a computing device, apparatus or system for implementing the method of any one of claims 12 to 22.

24. A communications network system comprising the system of any one of claims 1 to 11.

## Patentansprüche

1. Ein System zur Erstellung eines Erfassungsmodells (300), um Nachrichtenkommunikationen zwischen einem ersten Nachrichtenformat und einem zweiten Nachrichtenformat umzusetzen und zu überwachen, das erste Nachrichtenformat für den Gebrauch eines Kunden konfiguriert und das zweite Nachrichtenformat für den Gebrauch einer Datenquelle (106), die Datenquelle konfiguriert für die Netzwerkkommunikation mit dem Kunden durch die Anwendung eines Erfassungsmodells, umfasst das System:
ein Anwendungsmodul (608) zur Bereitstellung einer Beschreibung des ersten Nachrichtenformats, das erste Nachrichtenformat umfasst mindestens ein Nachrichtenelement des Kunden zur Zusammenstellung in einer ersten Datenstruktur;
ein Datenquellenmodul (616) zur Bereitstellung einer Beschreibung des zweiten Nachrichtenformats, das zweite Nachrichtenformat umfasst eine Vielzahl an Nachrichtenelementen der Datenquelle zur Zusammenstellung in einer Datenstruktur mit mehreren Abschnitten, die mehreren Abschnitte der zweiten Datenstruktur zur Darstellung der Beziehungen zwischen den Nachrichtenelementen der Datenquelle;
ein Erfassungsmodul (629) zur Erstellung von mindestens einem Erfassungsdeskriptor des Erfassungsmodels durch Vergleich der ersten Datenstruktur (306) mit der zweiten Datenstruktur (308), die Erfassungsdeskriptoren zur Verlinkung des mindestens einem Nachrichtenelement des Kunden der ersten Datenstruktur mit einer Vielzahl der Nachrichtenelemente der Datenquelle der zweiten Datenstruktur, wenn die Anzahl der Abschnitte in der zweiten Datenstruktur größer ist als die Anzahl der Abschnitte in der ersten Datenstruktur;
wobei das Erfassungsmodell (300), das die Erfassungsdeskriptoren einschließt, anschließend verwendet wird, um die Nachrichtenkommunikation zwischen dem Kunden und der Datenquelle zu überwachen.

2. Das System aus Anspruch 1, bei welchem das Kundengerät kabellos mit dem Netzwerk verbunden ist.

3. Das System aus Anspruch 1,2 oder 3, wobei die zweite Datenstruktur eine beliebige Feldstruktur, Stapelspeicherstruktur, verlinkte Listenstruktur, Baumstruktur oder Klassenstruktur umfasst.

4. Das System aus Anspruch 1, 2 oder 3, wobei die Erfassungsmodelldeskriptoren (300) die Nachrichtenelemente der Webdienstnachrichten auf den Nachrichtenelementen der Nachrichten des Kundengeräts abbilden, das Kundengerät (100) in Kommunikation mit dem Webdienst, der Webdienst ist die Datenquelle, die das zweite Nachrichtenformat benutzt und das Kundengerät (100) benutzt das erste Nachrichtenformat.

5. Das System aus jeglichem der Ansprüche 1 bis 4, wobei das Anwendungsmodul die Beschreibung des ersten Nachrichtenformats von den Nachrichtenkomponenten einer Anwendung, ausgedrückt in einer strukturierten Definitionssprache erhält, die Anwendung konfigurierbar zur Ausführung auf dem Kundengerät (100).

6. Das System aus jeglichem der Ansprüche 1 bis 5, wobei das Datenquellenmodul (616) die Beschreibung des zweiten Nachrichtenformats von den Nachrichtenkomponenten einer Webdienstschnittstelle, ausgedrückt in einer strukturierten Definitionssprache erhält.

7. Das System aus Anspruch 6, ferner ein Verbindungsmodul für den Zugang zur Beschreibung der Webdienstschnittstelle über das Netzwerk umfassend.

8. Das System aus Anspruch 7, ferner eine Vielzahl an Erfassungsmodellen (300), konfiguriert für die Nachrichtenkommunikation des Kundengeräts (100) mit mehreren entsprechenden Webdiensten umfassend.

9. Das System aus jeglichem der Ansprüche 1 bis 8, wobei das Erfassungsmodell konfiguriert ist, um Nachrichtenelemente der ersten und zweiten Nachrichtenformate abzubilden, einschließlich jeglicher: verbundener Datenfelder, die an akzeptierbare Typenkonvertierungen gebunden sind; Verlinkung ganzer komplexer Datenstrukturen basierend auf üblichen Definitionen zwischen den ersten und zweiten Datenstrukturen; oder Durchsetzung von vordefinierten Datenanforderungen zur Zufriedenstellung der Nachrichtenanforderungen von zugehörigen Nachrichtenstrukturen.

10. Das System aus jeglichem der Ansprüche 1 bis 9, ferner ein Erfassungsschema, ausgedrückt in einer strukturierten Definitionssprache, zur Leitung der Erzeugung eines Erfassungsmodells durch das Erfassungsmodul (629) umfassend.

11. Das System aus jeglichem der Ansprüche 1 bis 10, ferner eine Reihe von Prüfvorschriften, die vom Erfassungsmodul (629) verwendet werden, umfassend, einschließlich jeglichem: bereits erfassten Nachrichtenelement, das nicht nochmals erfasst werden kann; Erfassungsdeskriptoren, die die Erfassung zwischen 2 komplexen Datenstrukturen darstellen, können nur erzeugt werden, wenn diese komplexen Datenstrukturen hinsichtlich der Kardinalität und Typenkompatibilität zusammenpassen; die Erfassungsdeskriptoren werden für zwei kompatible Datenstrukturen für Datenfelder bis zu den entsprechenden elementaren Feldern erzeugt; die Erfassungsdeskriptoren sind nicht vollständig, bis alle der elementaren Felder der Datenstrukturen erfasst sind; oder ein letztendlich vorheriger Erfassungsdeskriptor zwischen der ersten Datenstruktur und der zweiten Datenstruktur wird auf einer grafischen Schnittstelle dargestellt.

12. Eine Methode zur Erzeugung eines Erfassungsmodells (300), um Nachrichtenkommunikationen zwischen einem ersten Nachrichtenformat und einem zweiten Nachrichtenformat umzusetzen und zu überwachen, das erste Nachrichtenformat für den Gebrauch eines Kunden konfiguriert und das zweite Nachrichtenformat für den Gebrauch einer Datenquelle (106), die Datenquelle konfiguriert für die Netzwerkkommunikation mit dem Kunden durch die Anwendung eines Erfassungsmodells, die Methode umfasst die Schritte:
Erhalt einer Beschreibung des ersten Datenformats, das erste Datenformat umfasst mindestens ein Kundennachrichtenelement zur Zusammenstellung in einer ersten Datenstruktur (306) ;
Erhalt einer Beschreibung des zweiten Datenformats, das zweite Datenformat umfasst eine Vielzahl von Nachrichtenelementen der Datenquelle zur Zusammenstellung in einer zweiten Datenstruktur mit mehreren Abschnitten (308), die mehreren Abschnitte der zweiten Datenstruktur zur Darstellung der Beziehungen zwischen den Nachrichtenelementen der Datenquelle;
Erstellung von mindestens einem Erfassungsdeskriptor des Erfassungsmodels durch Vergleich der ersten Datenstruktur (306) mit der zweiten Datenstruktur (308), die Erfassungsdeskriptoren zur Verlinkung des mindestens einem Nachrichtenelement des Kunden der ersten Datenstruktur (306) mit einer Vielzahl der Nachrichtenelemente der Datenquelle der zweiten Datenstruktur (308), wenn die Anzahl der Abschnitte in der zweiten Datenstruktur größer ist als die Anzahl der Abschnitte in der ersten Datenstruktur;
wobei das Erfassungsmodell, das die Erfassungsdeskriptoren einschließt, anschließend verwendet wird, um die Nachrichtenkommunikation zwischen dem Kunden und der Datenquelle zu überwachen.

13. Die Methode aus Anspruch 12, bei welchem das Kundengerät kabellos mit dem Netzwerk verbunden ist.

14. Die Methode aus Anspruch 12 oder 13, wobei die zweite Datenstruktur (308) eine beliebige Feldstruktur, Stapelspeicherstruktur, verlinkte Listenstruktur, Baumstruktur oder Klassenstruktur umfasst.

15. Die Methode aus Anspruch 12, 13 oder 14, wobei die Erfassungsmodelldeskriptoren die Nachrichtenelemente der Webdienstnachrichten auf den Nachrichtenelementen der Nachrichten des Kundengeräts abbilden, das Kundengerät (100) in Kommunikation mit dem Webdienst, der Webdienst ist die Datenquelle, die das zweite Nachrichtenformat benutzt und das Kundengerät (100) benutzt das erste Nachrichtenformat.

16. Die Methode aus jeglichem der Ansprüche 12 bis 15, wobei die Beschreibung des ersten Nachrichtenformats von den Nachrichtenkomponenten einer Anwendung, ausgedrückt in einer strukturierten Definitionssprache, erhalten wird, die Anwendung konfigurierbar zur Ausführung auf dem Kundengerät (100).

17. Die Methode aus jeglichem der Ansprüche 12 bis 15, wobei die Beschreibung des zweiten Nachrichtenformats von den Nachrichtenkomponenten einer Webdienstschnittstelle, ausgedrückt in einer strukturierten Definitionssprache, erhalten wird.

18. Die Methode aus Anspruch 17, ferner den Schritt zum Zugang zur Beschreibung der Webdienstschnittstelle über das Netzwerk umfassend.

19. Die Methode aus Anspruch 18, ferner den Schritt zur Erzeugung einer Vielzahl an Erfassungsmodellen, konfiguriert für die Nachrichtenkommunikation des Kundengeräts mit mehreren entsprechenden Webdiensten umfassend.

20. Die Methode aus jeglichem der Ansprüche 12 bis 19, wobei das Erfassungsmodell konfiguriert ist, um Nachrichtenelemente der ersten und zweiten Nachrichtenformate abzubilden, einschließlich jeglicher: verbundener Datenfelder, die an akzeptierbare Typenkonvertierungen gebunden sind; Verlinkung ganzer komplexer Datenstrukturen basierend auf üblichen Definitionen zwischen den ersten und zweiten Datenstrukturen; oder Durchsetzung von vordefinierten Datenanforderungen zur Zufriedenstellung der Nachrichtenanforderungen von zugehörigen Nachrichtenstrukturen.

21. Die Methode aus jeglichem der Ansprüche 12 bis 20, ferner den Schritt der Anwendung eines Erfassungsschemas, ausgedrückt in einer strukturierten Definitionssprache zur Leitung der Erzeugung des Erfassungsmodells.

22. Die Methode aus jeglichem der Ansprüche 12 bis 21, ferner den Schritt der Anwendung einer Reihe von Prüfvorschriften, die zur Erzeugung der Modelldeskriptoren verwendet werden, umfassend, die Prüfvorschriften einschließlich jeglichem: bereits erfassten Nachrichtenelement, das nicht nochmals erfasst werden kann; Erfassungsdeskriptoren, die die Erfassung zwischen 2 komplexen Datenstrukturen darstellen, können nur erzeugt werden, wenn diese komplexen Datenstrukturen hinsichtlich der Kardinalität und Typenkompatibilität zusammenpassen; die Erfassungsdeskriptoren werden für zwei kompatible Datenstrukturen für Datenfelder bis zu den entsprechenden elementaren Feldern erzeugt; die Erfassungsdeskriptoren sind nicht vollständig, bis alle der elementaren Felder der Datenstrukturen erfasst sind; oder ein letztendlich vorheriger Erfassungsdeskriptor zwischen der ersten Datenstruktur und der zweiten Datenstruktur wird auf einer grafischen Schnittstelle dargestellt.

23. Ein Computerprogrammprodukt zur Erzeugung eines Erfassungsmodells, um Nachrichtenkommunikationen zwischen einem ersten Nachrichtenformat und einem zweiten Nachrichtenformat umzusetzen, das erste Nachrichtenformat für den Gebrauch eines Kunden konfiguriert und das zweite Nachrichtenformat für den Gebrauch einer Datenquelle, die Datenquelle konfiguriert für die Netzwerkkommunikation mit dem Kunden durch die Anwendung eines Erfassungsmodells, umfasst das Computerprogrammprodukt:
ein computerlesbares Medium, einschließlich Hilfsmitteln für den Programmcode, ausführbar von einem Prozessor eines Computergeräts, -einheit oder -systems zur Umsetzung der Methode aus jeglichem der Ansprüche 12 bis 22.

24. Ein Kommunikationsnetzwerksystem, einschließlich des Systems aus jeglichem der Ansprüche 1 bis 11.

## Revendications

1. Un système de génération de modèle de correspondance (300) permettant de transformer et de surveiller la communication de messages entre un premier et un deuxième formats de message, le premier format étant configuré pour utilisation par un client et le deuxième étant destiné à l'utilisation par une source de données (106), la source des données configurées pour une communication réseau avec le client par le biais de la mise en oeuvre du modèle de correspondance, le système comprenant :
un module d'application (608) fournissant une description du premier format de message, ce premier format de message comprenant au moins un élément de message client pour être placé dans une première structure de données;
un module de source de données (616) fournissant une description du deuxième format de message, ce deuxième format de message comprenant une pluralité des éléments du message de source de données pour être placés dans une deuxième structure de données à multiples couches, les multiples couches de la deuxième structure de données représentant les relations entre les éléments du message de source de données;
un module de correspondance (629) permettant la génération d'au moins un descripteur de correspondance du modèle de correspondance en comparant la première structure de données (306) à la deuxième structure de données (308), les descripteurs de correspondance permettant de relier au moins un élément du message client de la première structure de données à une pluralité des éléments du message de source de données lorsque le nombre de couches de la deuxième structure de données est supérieure à un nombre de couches dans la première structure de données;
là où le modèle de correspondance (300) comprenant les descripteurs de correspondance est utilisé par la suite pour la surveillance de la communication de messages entre le client et la source de données.

2. Le système de la revendication 1, lorsque le dispositif client est branché sans fil à un réseau.

3. Le système de la revendication 1, 2 ou 3, là où la deuxième structure de données comprend l'un des éléments suivants : une structure de matrice, une structure de pile, une structure de liste chaînée, une structure arborescente, ou une structure de classe.

4. Le système de la revendication 1, 2 ou 3, là où les descripteurs du modèle de correspondance (300) établissent une correspondance entre les messages de service Web et les éléments de message des messages des dispositifs clients, le dispositif client (100) étant en communication avec le service Web; le service Web est la source de données utilisant le deuxième format de message, alors que le dispositif client (100) utilise le premier format de message.

5. Le système de l'une des revendications 1 à 4, là où le module d'application obtient la description du premier format de message des composantes de message d'une application exprimée dans un langage de définition structuré, l'application étant configurable pour permettre l'exécution sur le dispositif client (100).

6. Le système de l'une des revendications 1 à 5, là où le module de source de données (616) obtient la description du deuxième format de message des composantes de message d'une interface du service Web exprimée dans un langage de définition structuré.

7. Le système de la revendication 6, comprenant en plus un module de connexion permettant d'accéder à la description de l'interface du service Web sur le réseau.

8. Le système de la revendication 7, comprenant en plus une pluralité des modèles de correspondance (300) configurés pour la communication de messages du dispositif client (100) avec plusieurs services Web respectifs.

9. Le système de l'une des revendications 1 à 8, là où le modèle de correspondance est configuré de manière à établir la correspondance des éléments de message du premier format de message et du deuxième format de message, comprenant l'un de ce qui suit : les champs de données de liaison assujettis à des conversions de types acceptables; le lien de structures de données complexes complètes en se basant sur des définitions communes partagées par la première et la deuxième structure de données; ou l'application d'exigences prédéfinies sur le plan des données afin de satisfaire les exigences de messagerie de structures de messagerie apparentées.

10. Le système de l'une des revendications 1 à 9, comprenant de plus un schéma de correspondance exprimé dans un langage de définition structuré afin de guider la génération du modèle de correspondance par le module de correspondance (629).

11. Le système de l'une des revendications 1 à 10, comprenant en plus un ensemble de règles de validation utilisées par le module de correspondance (629) comportant l'un de ce qui suit : un message dont la correspondance est déjà établie ne peut faire l'objet d'une nouvelle correspondance; les descripteurs de correspondance représentant la correspondance entre 2 structures de données complexes ne peuvent être générés que si ces structures de données complexes correspondent en termes de cardinalité et de compatibilité des types; les descripteurs de correspondance sont générés pour deux structures de données compatibles selon les champs de données jusqu'aux champs élémentaires respectifs; les descripteurs de correspondance ne sont pas complets tant que tous les champs élémentaires des structures de données n'ont pas fait l'objet d'une correspondance; ou un éventuel descripteur de correspondance précédent entre la première structure de données et la deuxième structure de données est affiché sur une interface graphique.

12. Une méthode de génération d'un modèle de correspondance (300) visant à transformer et à surveiller la communication de messages entre un premier format de message et un deuxième format de message, le premier format de message étant configuré pour être utilisé par un client et le deuxième format de message pour être utilisé par une source de données (106), la source de données étant configurée pour la communication réseau avec le client par le biais de la mise en oeuvre du modèle de correspondance, la méthode comprenant les étapes suivantes :
l'obtention d'une description du premier format de message, le premier format de message comprenant au moins un élément de message client étant placé dans une première structure de données (306);
l'obtention d'une description du deuxième format de message, le deuxième format de message comprenant une pluralité d'éléments de message de la source de données étant placés dans une deuxième structure de données à multiples couches (308), les multiples couches de la deuxième structure de données servant à représenter les relations entre les éléments de message de la source de données;
la génération d'au moins un descripteur de correspondance du modèle de correspondance en comparant la première structure de données (306) à la deuxième de données (308), les descripteurs de correspondance permettant de lier au moins un élément de message client de la première structure de données (306) à une pluralité des éléments de message de la source de données de la seconde structure de données (308) lorsque le nombre de couches de la deuxième structure de données est supérieur à un nombre de couches de la première structure de données;
là où le modèle de correspondance comprenant les descripteurs de correspondance est utilisé par la suite pour la surveillance de la communication de messages entre le client et la source de données.

13. La méthode de la revendication 12, lorsque le dispositif client est branché sans fil au réseau.

14. La méthode de la revendication 12 ou 13, où la deuxième structure de données (308) comprend l'un des éléments suivants : une structure de matrice, une structure de pile, une structure de liste chaînée, une structure arborescente, ou une structure de classe.

15. La méthode de la revendication 12, 13 ou 14, où les descripteurs du modèle de correspondance établissent une correspondance entre les messages de service Web et les éléments de message des messages des dispositifs clients, le dispositif client (100) étant en communication avec le service Web; le service Web est la source de données utilisant le deuxième format de message et le dispositif client (100) utilise le premier format de message.

16. La méthode de l'une des revendications 12 à 15, où la description du premier format de message est obtenue des composantes de message d'une application exprimée dans un langage de définition structuré, l'application étant configurable pour permettre l'exécution sur le dispositif client (100).

17. La méthode de l'une des revendications 12 à 15, où la description du deuxième format de message est obtenue des composantes de message d'une interface du service Web exprimée dans un langage de définition structuré.

18. La méthode de la revendication 17, comprenant en plus l'étape d'accès de la description de l'interface du service Web sur le réseau.

19. La méthode de la revendication 18, comprenant en plus l'étape de génération d'une pluralité des modèles de correspondance configurés pour la communication de messages du dispositif client avec plusieurs services Web respectifs.

20. La méthode de l'une des revendications 12 à 19, où le modèle de correspondance est configuré de manière à établir la correspondance des éléments de message du premier format de message et du deuxième format de message, comprenant l'un de ce qui suit : les champs de données de liaison assujettis à des conversions de types acceptables; le lien de structures de données complexes complètes en se basant sur des définitions communes partagées par la première et la deuxième structures de données; ou l'application d'exigences prédéfinies sur le plan des données afin de satisfaire les exigences de messagerie de structures de messagerie apparentées.

21. La méthode de l'une des revendications 12 à 20, comprenant en plus l'étape d'application d'un schéma de correspondance exprimé dans un langage de définition structuré afin de guider la génération du modèle de correspondance par le module de correspondance.

22. La méthode de l'une des revendications 12 à 21, comprenant en plus l'étape d'application d'un ensemble de règles de validation utilisées lors de la génération des descripteurs du modèle, les règles de validation comprenant l'un de ce qui suit : un message dont la correspondance est déjà établie ne peut faire l'objet d'une nouvelle correspondance; les descripteurs de correspondance représentant la correspondance entre 2 structures de données complexes ne peuvent être générés que si ces structures de données complexes correspondent en termes de cardinalité et de compatibilité des types; les descripteurs de correspondance sont générés pour deux structures de données compatibles selon les champs de données jusqu'aux champs élémentaires respectifs; les descripteurs de correspondance ne sont pas complets tant que tous les champs élémentaires des structures de données n'ont pas fait l'objet d'une correspondance; ou un descripteur éventuel de correspondance précédent entre la première structure de données et la deuxième structure de données est affiché sur une interface graphique.

23. Un programme informatique pour la génération d'un modèle de correspondance permettant de transformer la communication de messages d'un premier format de message à un deuxième format de message, le premier format de message étant configuré pour utilisation par un client et le deuxième format de message pour utilisation par une source de données, la source de données étant configurée pour la communication réseau avec le client par le biais de la mise en oeuvre du modèle de correspondance, le programme informatique comprenant :
un médium pouvant être lu par un ordinateur, comprenant le code du programme exécutable par le processeur d'un dispositif, d'un appareil ou d'un système informatique servant à la mise en oeuvre de la méthode d'une des revendications 12 à 22.

24. Un système de communication réseau comprenant le système de l'une des revendications 1 à 11.
